# EUROPÄISCHE PATENTSCHRIFT

(11) **EP 2 050 381 B1**
(45) Veröffentlichungstag und Bekanntmachung des Hinweises auf die Patenterteilung: **06.01.2016**
(21) Anmeldenummer: 08017107.7
(22) Anmeldetag: 29.09.2008
(51) Int. Cl.: A47L 15/24, A47L 15/42

(54) **Geschirrspülmaschine mit verbesserter Wärmerückgewinnung**
Dishwasher with improved heat recovery
Lave-vaisselle doté d'une récupération de chaleur améliorée

(30) Priorität: 19.10.2007 DE 102007050533; 05.06.2008 DE 102008026875
(43) Veröffentlichungstag der Anmeldung: 22.04.2009
(73) Patentinhaber: MEIKO Maschinenbau GmbH & Co. KG, 77652 Offenburg (DE)
(72) Erfinder: Gaus, Bruno, Dipl.-Ing. (FH), 77654 Offenburg (DE); Kupetz, Joachim, Dipl.-Ing. (FH), 77791 Berghaupten (DE); Lehmann, Denis, Dipl.-Ing. (FH), 77799 Ortenberg (DE); Näger, Thomas, 77654 Offendurg (DE); Peukert, Thomas, Dr.-Ing., 77815 Bühl (DE); Schneider, Vera, Dipl.-Ing. (BA), 77654 Offenburg (DE)
(74) Vertreter: Hörschler, Wolfram Johannes

(56) Entgegenhaltungen:
- WO-A1-2005/070276
- DE-A1- 10 334 792
- DE-A1-102004 030 015
- JP-A- 2007 037 798

## Beschreibung

### Gebiet der Erfindung

Die Erfindung betrifft ein Reinigungsgerät zur Reinigung von Reinigungsgut in einer Reinigungskammer, wobei das Reinigungsgerät eine Wärmerückgewinnungseinrichtung aufweist. Weiterhin betrifft die Erfindung ein Verfahren zur Wärmerückgewinnung in einem Reinigungsgerät. Derartige Reinigungsgeräte und Verfahren zur Wärmerückgewinnung werden beispielsweise in Großküchen zur Reinigung von Geschirr, Gläsern, Tassen, Besteck, Tabletts oder ähnlichem Reinigungsgut eingesetzt. Auch andere Anwendungsgebiete und Arten von Reinigungsgut, insbesondere im gewerblichen Bereich, sind jedoch denkbar.

### Stand der Technik

Aus den verschiedensten Bereichen der Technik und Naturwissenschaften sind Reinigungsgeräte bekannt, mittels derer verschiedene Arten von Reinigungsgut mit unterschiedlichen Zielsetzungen gereinigt werden können. Eine Zielsetzung ist beispielsweise die zumindest weitgehende Befreiung des Reinigungsgutes von anhaftenden Schmutzresten, eine andere Zielsetzung, welche alternativ oder zusätzlich realisiert werden kann, die Hygienisierung des Reinigungsgutes, welche bis hin zu einer Desinfektion des Reinigungsgutes reichen kann. Die Reinigung erfolgt in der Regel durch Beaufschlagung des Reinigungsgutes mit mindestens einem Reinigungsfluid, welches beispielsweise ein flüssiges Reinigungsfluid (zum Beispiel eine oder mehrere Spülflüssigkeiten, beispielsweise mit einem Reinigungsmittel und/oder einem Klarspüler versetztes Wasser) und/oder ein gasförmiges Reinigungsfluid, wie beispielsweise Dampf, umfassen kann.

In vielen Fällen muss in einem derartigen Reinigungsgerät eine nicht unerhebliche Menge an thermischer Energie aufgebracht werden. Diese thermische Energie kann unmittelbar beim Reinigungsprozess benötigt werden, beispielsweise indem das Reinigungsfluid mit einer erhöhten Temperatur auf das Reinigungsgut aufgebracht wird. Beispielsweise können für einen Klarspülvorgang in einer Geschirrspülmaschine Klarspülflüssigkeiten mit einer Temperatur von ca. 85°C eingesetzt werden. Ein weiteres Beispiel ist die thermische Energie, welche zur Erzeugung des Dampfes in Dampfsterilisatoren und/oder Dampfdesinfektionsgeräten erforderlich ist. Weiterhin können Reinigungsgeräte auch derart eingerichtet sein, dass ein oder mehrere Trocknungsschritte durchgeführt werden. Bei einer derartigen Trocknung kann beispielsweise das Reinigungsgut mit warmer Luft beaufschlagt werden, wofür ebenfalls thermische Energie aufgewendet werden muss.

Insbesondere im gewerblichen Bereich kann dieser thermische Energieaufwand eine erhebliche Größenordnung annehmen, so dass beispielsweise Heizleistungen einen beträchtlichen Beitrag zu den gesamten Betriebskosten des Reinigungsgerätes bilden können. In gewerblichen Geschirrspülmaschinen betragen die Heizleistungen beispielsweise von einigen 10 kW bis hin zu einigen 100 kW, abhängig beispielsweise vom Betriebszustand und/oder der Ausgestaltung der Geschirrspülmaschine.

Eine weitere Problematik bei bekannten Reinigungsgeräten, insbesondere im Bereich der gewerblichen Nutzung, besteht darin, dass diese in der Regel in einer Arbeitsumgebung eingesetzt werden, welche durch Abwärme des Reinigungsgerätes, insbesondere durch feuchte Abwärme, nicht über Gebühr belastet werden sollte. So ist beispielsweise in Großküchen ein erheblicher Aufwand erforderlich, um feuchte Abwärme, welche in den Geschirrspülmaschinen gebildet wird, nicht unmittelbar in die Arbeitsumgebung zu leiten, da ansonsten die Arbeitsbedingungen in dieser Arbeitsumgebung innerhalb kurzer Zeit unzumutbar würden. Insofern sind beispielsweise aufwändige bauseitige Abluftvorrichtungen erforderlich, um die feuchte Abwärme aus der Arbeitsumgebung abzuleiten. Alternativ oder zusätzlich können die Reinigungsgeräte Trocknungsvorrichtungen aufweisen, um der Abluft Feuchtigkeit zu entziehen und/oder um die Abluft zu kühlen.

Zahlreiche Trocknungsvorrichtungen, welche die Trocknung des Reinigungsgutes unterstützen und die in die Umgebung abgegebene Abluft entfeuchten, sind aus dem Stand der Technik bekannt. Ein Beispiel einer derartigen Trocknungsvorrichtung, welche mit Hilfe von Peltierelementen arbeitet, ist aus DE 198 13 924 A1 bekannt. Diese Druckschrift zeigt eine Kondensationseinrichtung für ein Hausgerät, umfassend ein Modulelement mit einem Peltierelement. Das Peltierelement weist eine wärmeaufnehmende Fläche und eine wärmeabgebende Fläche auf. Die wärmeaufnehmende Fläche entzieht einer Arbeitsraumatmosphäre eines Arbeitsraums des Haushaltsgeräts Wärme, wodurch Feuchtigkeit der Arbeitsraumatmosphäre an der gekühlten Stelle kondensiert und so ein Trocknungsvorgang des Haushaltsgeräts wirksamer und schneller ist. Die wärmeabgebende Fläche des Peltierelements kann auch an ein wärmeaufnehmendes Volumen, wie zum Beispiel einen Wasserbehälter, gekoppelt sein.

Nachteilig an der in der DE 198 13 924 A1 beschriebenen Vorrichtung aus der Sicht der gewerblichen Anwendbarkeit ist jedoch, dass der Wasserbehälter zur Kühlung des Peltierelements, falls sich dieser zu stark erwärmt, entleert und mit Frischwasser gefüllt werden muss. Insofern ist zum einen die Funktionalität der Kondensationseinrichtung instabil und kann über eine längere Betriebsdauer schwanken. Insbesondere in gewerblichen Reinigungsgeräten, welche beispielsweise permanent in einem mehrstündigen Betrieb arbeiten müssen, kann dies von erheblichem Nachteil sein. Zudem ist ein sicherer und zuverlässiger Trocknungsbetrieb aufgrund der beschriebenen Temperaturdrift im Wasserbehälter nicht in allen Fällen gewährleistet. Weiterhin geht die in der Abwärme enthaltene Energie verloren, und es muss für den Betrieb des Peltierelements sogar zusätzlich Energie aufgewendet werden.

Auch aus dem Bereich der Klimatechnik sind Kühlgeräte bekannt, in welchen Peltierelemente zum Klimatisieren von Raumluft und anderen Medien eingesetzt werden. So beschreibt beispielsweise EP 0 842 382 B1 ein H-Thermokompaktgerät, welches aus Thermoelementblöcken mit mehreren Peltierelementen besteht. Dabei wird thermische Energie von einem Medium auf einer Kaltseite hin zu einem Medium auf einer Warmseite übertragen. Unter anderem wird dabei vorgeschlagen, das entstandene Warmwasser als Brauchwasser zu sammeln und zur Weiterverwendung zur Verfügung zu stellen. Insgesamt ist der in EP 0 842 382 B1 beschriebene Aufbau jedoch vergleichsweise komplex.

Aus dem Bereich gewerbliche Geschirrspülmaschinen sind Reinigungsgeräte bekannt, welche nicht nur die beschriebene Problematik der Abluftbelastung der Umgebung zu mindern versuchen, sondern welche auch darauf ausgelegt sind, eine zumindest teilweise Wärmerückgewinnung der in der Abwärme enthaltenen thermischen Energie zu ermöglichen. Ein Beispiel derartiger Systeme ist in US 3,598,131 dargestellt. Hierbei wird mittels einer Absaugvorrichtung Dampf aus einer Geschirrspülmaschine in einen Schacht abgesaugt und über einen Wärmetauscher geleitet. Der Wärmetauscher ist in diesem Fall als poröses Material ausgestaltet, welches mit Frischwasser besprüht wird. Die kondensierte Feuchtigkeit wird aufgesammelt und der Geschirrspülmaschine wieder zugeführt. Eine ähnliche Geschirrspülmaschine mit Wärmerückgewinnung ist auch in DE 10 2004 003 797 A1 dargestellt.

Nachteilig an dem in US 3,598,131 dargestellten Reinigungsgerät ist jedoch, dass die Funktionalität der Wärmerückgewinnungseinrichtung stark von der Temperatur des aufgesprühten Kaltwassers abhängt. Wird die Geschirrspülmaschine beispielsweise in Gegenden mit heißem Klima betrieben, so hat üblicherweise das "Kaltwasser" eine andere Temperatur als in Gegenden mit milderem oder sogar kühlem Klima. Insofern kann die Funktionalität der Wärmerückgewinnungseinrichtung stark schwanken, und eine gezielte Entfeuchtung bzw. Kühlung kann nicht in allen Fällen gewährleistet werden.

Ein weiterer Nachteil der in US 3,598,131 gezeigten Wärmerückgewinnungseinrichtung besteht darin, dass Kühlflüssigkeit sich mit dem kondensierten Wasser vermischt, so dass insgesamt das rückgeführte Wasser eine vergleichsweise niedrige Temperatur aufweist und in der Regel nachgeheizt werden muss, bevor dieses dem Reinigungsvorgang wieder zugeführt werden kann. Zudem ist die gezeigte Wärmerückgewinnungseinrichtung aus hygienischen Aspekten nachteilig, da ein Verkeimen des kondensierten Wassers und somit des Reinigungsguts bzw. des porösen Wärmetauschers zu befürchten ist.

DE 10 2004 030 015 A1 *bezieht sich auf ein Spülmaschinen-Betriebsverfahren und eine Transportspülmaschine. Gemäß dem Verfahren zum Betrieb einer Spülmaschine insbesondere einer Transportspülmaschine sind mindestens ein Reinigungsspülschritt und ein Klarspülschritt vorgesehen. Ein Reinigungsspülen oder ein nachgeordnetes Heißspülen erfolgt mit einer hohen Wassertemperatur, die insbesondere mehr als 70°C beträgt vor dem Klarspülen unter dem Einsatz regenerierter Spüllösung. Diese wird in Abhängigkeit vom Ergebnis einer verunreinigungsmessung einer Spülwanne gesammelte Spüllösung insbesondere einer Trübungsmessung an dieser aus der gesammelten Spüllösung erzeugt.*

DE 103 347 92 A1 *bezieht sich auf eine Geschirrspülmaschine. Um eine Geschirrspülmaschine zu erschaffen, mit der es möglich ist, unter wirtschaftlichen Gesichtspunkten das im Spülbehälter befindliche Spülgut effizient zu reinigen und zu trocknen und den damit verbundenen Energieaufwand so gering wie möglich zu halten, weißt die Geschirrspülmaschine einen Spülbehälter und ein mit dem Spülbehälter luftleitend verbundenes Leitungssystem auf. In diesem ist wenigstens ein Petierelement angeordnet. Das Element dient einerseits zur Abkühlung und dadurch zur Trocknung und andererseits zur Erwärmung durchgeleiteter Luft aus dem Spülbehälter.*

Weiterhin besteht theoretisch die Möglichkeit, zur Wärmerückgewinnung so genannte Wärmepumpen einzusetzen. Wärmepumpen sind Maschinen, die unter Zufuhr von mechanischer Arbeit Wärme von einem niedrigen zu einem höheren Temperaturniveau pumpen. Auf diese Weise kann insbesondere der Problematik begegnet werden, dass Kühlwasser

Auf diese Weise kann insbesondere der Problematik begegnet werden, dass Kühlwasser nach Durchströmen der Wärmerückgewinnungseinrichtung eine vergleichsweise niedrige Temperatur hat und nach einer Rückführung in das Reinigungsgerät weiter aufgeheizt werden muss. Bei Wärmepumpen wird in der Regel eine Verdampfungswärme genutzt, um beispielsweise der Abwärme einer Geschirrspülmaschine eine Wärmemenge zu entziehen. Wärmepumpen lassen sich jedoch in der Regel nicht bedarfsweise regeln und weisen in der Praxis Restriktionen im Regelverhalten auf, da lediglich eine Zweipunktregelung möglich ist. Zudem weisen diese einen definierten Betriebspunkt mit festgelegter Toleranz auf, welcher nicht skalierbar ist. Dies ist insbesondere für den gewerblichen Einsatz in vielen Fällen problematisch. Zudem sind mit dem Einsatz von Wärmepumpen zumeist beträchtliche zusätzliche Kosten sowie die Einplanung erheblicher Bauräume verbunden. Weitere Nachteile der Verwendung von Wärmepumpen liegen in dem im Betrieb entstehenden Lärm, dem hohen mechanischen Verschleiß und in Vibrationen.

### Aufgabe der vorliegenden Erfindung

Eine Aufgabe der vorliegenden Erfindung besteht somit darin, ein Reinigungsgerät sowie ein Verfahren zum Betrieb eines derartigen Reinigungsgerätes bereitzustellen, welche die oben beschriebenen Nachteile bekannter Reinigungsgeräte und/oder Verfahren vermeiden. Insbesondere soll eine Wärmerückgewinnung bereitgestellt werden, welche stabil und zuverlässig unter verschiedenen Betriebsbedingungen betreibbar ist, welche flexibel einsetzbar ist und welche eine effiziente Rückführung von Wärme ermöglicht, welche gut regelbar ist, verschleißarm bzw. verschleißfrei arbeitet und gut skalierbar ist.

### Beschreibung der Erfindung

Diese Aufgabe wird durch ein Reinigungsgerät sowie ein Verfahren zur Wärmerückgewinnung in einem Reinigungsgerät gemäß den unabhängigen Ansprüchen gelöst. Vorteilhafte Weiterbildungen der Erfindung, welche einzeln oder in Kombination realisiert werden können, sind in den abhängigen Ansprüchen dargestellt. Sämtliche Ansprüche werden hiermit durch Bezugnahme zum Inhalt dieser Beschreibung gemacht.

Es wird ein Reinigungsgerät zur Reinigung von Reinigungsgut vorgeschlagen, welches eingerichtet ist, um das Reinigungsgut in mindestens einer Reinigungskammer mit mindestens einem Reinigungsfluid zu beaufschlagen. Die Reinigungskammer kann geschlossen (beispielsweise mit einem Öffnungsmechanismus zum Be- und Entladen mit Reinigungsgut) und/oder teilweise offen (z.B. mit einer oder mehreren Beladeöffnungen versehen) ausgestaltet sein und soll sicherstellen, dass Reinigungsfluid nicht ungehindert in die Arbeitsumgebung spritzen kann und dass beispielsweise Dampfwrasen nicht oder nur in vermindertem Umfang aus dem Reinigungsgerät ausströmen können. Das Reinigungsgerät kann beispielsweise grundsätzlich gemäß einem der eingangs beschriebenen Reinigungsgeräte ausgestaltet sein. Beispielsweise kann das Reinigungsgerät eine Geschirrspülmaschine, insbesondere eine gewerbliche Geschirrspülmaschine aufweisen bzw. sein, wobei jedoch auch nicht-gewerbliche Geschirrspülmaschinen möglich sind. Gewerbliche Geschirrspülmaschinen unterscheiden sich in der Regel von Haushaltsgeräten dadurch, dass, um schneller ein Reinigungsfluid mit einer benötigten Reinigungstemperatur bereitzustellen zu können, ein separater, das heißt von der Reinigungskammer getrennter Fluidtank (insbesondere ein Boiler und/oder ein Durchlauferhitzer) vorgesehen ist, wohingegen in Haushaltsgeräten üblicherweise ein Wasserwechsel innerhalb der Reinigungskammer erfolgt. Die Geschirrspülmaschine kann beispielsweise eine Durchlaufgeschirrspülmaschine, insbesondere eine Bandtransportmaschine und/oder eine Korbtransportmaschine, umfassen. Alternativ oder zusätzlich kann auch eine Einkammer-Geschirrspülmaschine, insbesondere wiederum für den gewerblichen Einsatz, umfasst sein, beispielsweise eine Einkammer-Geschirrspülmaschine in Form eines Frontladers und/oder eine Einkammer-Geschirrspülmaschine in Form eines Topladers und/oder einer Haubengeschirrspülmaschine, beispielsweise einer Durchschub-Haubengeschirrspülmaschine. Insbesondere kann eine gewerbliche Einkammergeschirrspülmaschine mit mindestens einem von der Reinigungskammer getrennten Fluidtank umfasst sein. Alternativ oder zusätzlich zu mindestens einer Geschirrspülmaschine kann das Reinigungsgerät jedoch auch eine andere Art von Reinigungsgerät zur Reinigung von Reinigungsgut beinhalten, beispielsweise ein Dampfdesinfektionsgerät und/oder einen Dampfsterilisator, beispielsweise zur Reinigung von in Krankenhäusern und/oder Pflegeheimen anfallendem medizinischem Reinigungsgut. Auch andere Arten von Reinigungsgeräten sind jedoch möglich. Neben den genannten Geräten kann das Reinigungsgerät weitere Einrichtungen umfassen, so dass beispielsweise mehrere Geschirrspülmaschinen zu einer Spülstraße zusammengefasst sind, welche auch noch zusätzliche, in Großküchen benötigte Geräte umfassen kann.

Das Reinigungsgerät umfasst vorzugsweise mindestens einen Fluidtank zur Bevorratung des Reinigungsfluids, aus welchem dann beispielsweise eine oder mehrere Sprühdüsen mit Reinigungsfluid gespeist werden können. Dieser Fluidtank kann getrennt von der Reinigungskammer ausgebildet sein und/oder kann auch als Bestandteil der Reinigungskammer konstruiert werden. Der Fluidtank kann weiterhin ganz oder teilweise als Drucktank ausgestaltet sein, kann jedoch auch ganz oder teilweise als druckloser Tank gestaltet werden. Die Ausgestaltung des mindestens einen Fluidtanks kann an die Art des Reinigungsgerätes angepasst sein. Wird beispielsweise eine Durchlaufgeschirrspülmaschine mit einer oder mehreren Reinigungszonen verwendet, so kann beispielsweise jeder Reinigungszone und/oder mehreren Reinigungszonen gemeinsam ein derartiger Fluidtank zugeordnet sein. Besonders bevorzugt ist es dabei, wenn die Durchlaufgeschirrspülmaschine derart eingerichtet ist, dass Reinigungsgut die mindestens eine Reinigungszone in einer Durchlaufrichtung durchläuft. Beispielsweise kann die mindestens eine Reinigungszone mindestens eine Pumpenklarspülzone und/oder mindestens eine Frischwasserklarspülzone umfassen, welche mindestens einen Klarspültank aufweist, wobei der mindestens eine Fluidtank in diesem Fall beispielsweise den mindestens einen Klarspültank umfassen kann.

Der Begriff "Fluidtank" ist jedoch weit zu fassen und kann, muss aber nicht notwendigerweise, einen Container mit erweitertem Durchmesser zur Bevorratung einer Menge an Reinigungsfluid umfassen. Der Fluidtank kann auch ganz oder teilweise in die Reinigungskammer integriert sein, beispielsweise indem der Fluidtank in einem Bodenbereich der Reinigungskammer ausgebildet ist. Alternativ oder zusätzlich kann der mindestens eine Fluidtank jedoch auch einen separaten Tank umfassen, was insbesondere bei gewerblichen Geschirrspülmaschinen bevorzugt ist. Es können auch mehrere Fluidtanks vorgesehen sein, beispielsweise für unterschiedliche Teilprozesses der Reinigung. Sind mehrere Reinigungszonen vorgesehen, so kann beispielsweise jeder Reinigungszone mindestens ein Fluidtank zugeordnet sein, wobei einer oder mehrere dieser Fluidtanks für die unten beschriebene Wärmerückführung genutzt werden können. Der mindestens eine Fluidtank kann weiterhin ein oder mehrere druckbeaufschlagte und/oder drucklose Reservoire zur Bevorratung einer Menge an, über ein Rohrleitungssystem zugeführtem, Reinigungsfluid umfassen, kann jedoch auch ganz oder teilweise lediglich als durchströmtes Rohrleitungssystem ausgestaltet sein, in welchem das Reinigungsfluid strömen kann. So kann beispielsweise das erwärmte erste Kühlfluid nach Durchströmen einer Wärmerückgewinnungseinrichtung (siehe unten) auch unmittelbar der Frischwasserklarspülzone zugeführt werden, wobei in diesem Fall das Rohrleitungssystem zwischen Wärmerückgewinnungseinrichtung und Frischwasserklarspülzone als "Fluidtank" im weiteren Sinne verstanden werden kann. Dieses Rohrleitungssystem kann beispielsweise auch mit zusätzlichen Durchlauferhitzern ausgestattet sein, um das erste Kühlfluid weiter zu erwärmen. Maßgeblich ist in jedem Fall jedoch, dass das in der Wärmerückgewinnungseinrichtung erwärmte erste Kühlfluid aus dem Fluidtank dem Reinigungsprozess in irgendeiner Form wieder zugeführt wird, um die in diesem ersten Kühlfluid gespeicherte Wärme wieder nutzen zu können.

Wie oben beschrieben, kann das Reinigungsfluid beispielsweise mindestens ein flüssiges und/oder mindestens ein gasförmiges Reinigungsfluid umfassen. In der folgenden Beschreibung sei ohne Beschränkung des Umfangs der Erfindung davon ausgegangen, dass das Reinigungsfluid ein wässriges Reinigungsfluid ist, wie es beispielsweise in Geschirrspülmaschinen eingesetzt wird. Diesem wässrigen Reinigungsfluid können beispielsweise ein Reinigungsmittel und/oder ein Klarspüler beigemischt sein. Auch andere Arten der Beimischungen und/oder Zusammensetzungen des Reinigungsfluids sind jedoch denkbar und im Rahmen der vorliegenden Erfindung realisierbar. Insbesondere kann das Reinigungsfluid mit einer gegenüber der Raumtemperatur erhöhten Temperatur betrieben werden, beispielsweise Temperaturen im Bereich von 60°C und/oder Temperaturen im Bereich von 80 bis 90°C, beispielsweise 85°C. Letzteres wird insbesondere im Bereich der Klarspülung favorisiert. Andere Arten der Temperaturgestaltung sind jedoch ebenfalls denkbar.

Zur Minderung der oben beschriebenen Problematik der Belastung der Arbeitsumgebung des Reinigungsgeräts mit feuchter Luft, insbesondere mit Dampfwrasen, weist das Reinigungsgerät eine Absaugvorrichtung zum Absaugen von feuchter Luft aus der Reinigungskammer auf. Diese Absaugvorrichtung kann beispielsweise eine Abluftöffnung aufweisen, durch welche die feuchte Luft (beispielsweise nach Durchtritt durch die unten beschriebene Wärmerückgewinnungseinrichtung) aus dem Reinigungsgerät ausgeleitet wird. Diese Abluftöffnung kann beispielsweise unmittelbar und/oder über einen Filter in die Arbeitsumgebung des Reinigungsgerätes münden. Alternativ oder zusätzlich kann die mindestens eine Abluftvorrichtung jedoch auch an eine bauseitig vorgesehene Ablufteinrichtung, beispielsweise ein Entlüftungsrohr, angeschlossen werden.

Die Begriffe der "Absaugvorrichtung" und des "Absaugens" sind wiederum weit zu fassen und können beispielsweise eine aktive Absaugung (beispielsweise mittels eines oder mehrerer Absauggebläse) der feuchten Luft beinhalten. Alternativ kann die Absaugvorrichtung jedoch auch ohne Gebläse ausgestaltet sein und beispielsweise lediglich die mindestens eine Abluftöffnung umfassen. In diesem Fall kann für den Zweck der Absaugung dann beispielsweise ein an der Ablufteinrichtung bauseitig anliegender Unterdruck verwendet werden, oder, alternativ oder zusätzlich, ein Überdruck der feuchten Luft gegenüber der Umgebungsluft oder besondere Luftströmungen, welche den Austrag feuchter Luft aus dem Reinigungsgerät begünstigen, oder einfach eine Konvektion der feuchten Luft. Die Absaugung und die Absaugvorrichtung sollen sich also lediglich dadurch definieren, dass diese einen Austrag der feuchten Luft aus dem Reinigungsgerät in irgendeiner Weise ermöglichen und/oder begünstigen.

Das Reinigungsgerät weist weiterhin mindestens eine Wärmerückgewinnungseinrichtung auf. Diese Wärmerückgewinnungseinrichtung ist eingerichtet, um der feuchten Luft Wärme zu entziehen. Im Unterschied zu bekannten Wärmerückgewinnungseinrichtungen, wie beispielsweise der in US 3,598,131 beschriebenen Wärmerückgewinnungseinrichtung, besteht ein Grundgedanke der vorliegenden Erfindung jedoch darin, bekannte Wärmerückgewinnungseinrichtungen vorteilhaft durch eine Verwendung von Peltierelementen, wie sie beispielsweise aus der DE 198 13 924 A1 bekannt sind, zu modifizieren. Diese Modifikation erfolgt jedoch dergestalt, dass die bekannten Nachteile der Peltierelemente, beispielsweise die oben bezüglich der DE 198 13 924 A1 beschriebenen Nachteile, durch eine entsprechende Konstruktion vermieden werden können.

Die Wärmerückgewinnungseinrichtung weist dementsprechend mindestens ein Peltierelement mit einer Wärmeaufnahmeseite und einer Abwärmeseite auf. Die Wärmeaufnahmeseite kann direkt oder indirekt genutzt werden, um der feuchten Luft Wärme zu entziehen. Im Unterschied zu bekannten Peltiertrocknern, wie beispielsweise dem aus DE 198 13 924 A1 bekannten Peltiertrockner mit Kopplung der Abwärmeseite mit einem einfachen Wasservolumen, ist jedoch erfindungsgemäß eine Fluidheizvorrichtung vorgesehen, welche mit der Abwärmeseite in thermischem Kontakt steht. Diese Fluidheizvorrichtung ist derart eingerichtet, dass diese mit einem ersten Kühlfluid in Kontakt steht, beispielsweise von dem ersten Kühlfluid durchströmt wird, welches dabei Abwärme von der Abwärmeseite des Peltierelements aufnimmt. Die Fluidheizvorrichtung ist somit ausgestaltet, um das erste Kühlfluid zu erwärmen. Die Abwärme des Peltierelements wird, im Unterschied zur DE 198 13 924 A1, dem Reinigungsgerät somit zumindest teilweise wieder zugeführt, und dieses ist eingerichtet, um das erste Kühlfluid in einem nachfolgenden Reinigungsprozess zu verwenden.

Beispielsweise kann das erste Kühlfluid nach Durchströmen der Fluidheizvorrichtung zu der Reinigungskammer und/oder in den Fluidtank geleitet werden und so für den Reinigungsvorgang verwendbar sein. Alternativ kann die Abwärme des Peltierelements auch unmittelbar auf den Fluidtank übertragen werden, beispielsweise indem die Fluidheizvorrichtung unmittelbar mit dem Fluidtank in Verbindung steht. Das Reinigungsgerät ist dann vorzugsweise derart ausgestaltet, dass das erste Kühlfluid nach Durchströmen der Fluidheizvorrichtung am Peltierelement, und somit auch die von diesem ersten Kühlfluid aufgenommene Wärme, für einen Reinigungsvorgang in der Reinigungskammer einsetzbar sind.

Der Begriff des Reinigungsprozesses oder Reinigungsvorgangs ist dabei im Sinne der vorliegenden Erfindung weit zu fassen. Er umfasst grundsätzlich jeden Vorgang, bei welchem das zu reinigende Reinigungsgut mit mindestens einem Reinigungsfluid beaufschlagt wird, insbesondere einer Reinigungsflüssigkeit. Somit kann dieser Begriff beispielsweise einen beliebigen Spülprozess, eine Vorabräumung, eine Grobreinigung, ein Vorspülen, eine Hauptreinigung, ein Nachspülen, ein Klarspülen oder eine beliebige Kombination der genannten Reinigungsprozesse und/oder anderer Arten von Reinigungsprozesse umfassen. Auch andere Arten von Reinigungsprozessen sind jedoch denkbar.

Die Fluidheizvorrichtung kann auf eine beliebige Weise ausgestaltet sein, die einen Wärmeübertrag zwischen der Abwärmeseite des Peltierelements und dem ersten Kühlfluid ermöglicht. Beispielsweise kann eine einfache Wärmeübertragungsfläche umfasst sein, beispielsweise eine einfache Wand eines Fluidtanks. Insofern ist auch der Begriff "durchströmen" im Sinne der vorliegenden Erfindung weit auszulegen. Neben einer Strömung, welche beispielsweise einen Massenstrom durch eine Kühlfluidleitung umfasst, kann die Abwärmeseite des Peltierelements und/oder die Fluidheizvorrichtung auch unmittelbar mit dem Fluidtank gekoppelt sein, so dass beispielsweise das erste Kühlfluid in diesem Fluidtank (beispielsweise einem Boiler) unmittelbar durch die an dem Peltierelement entstehende Abwärme geheizt wird, unabhängig davon, ob in dem Fluidtank das erste Kühlfluid in Bewegung ist oder nicht. Prinzipiell umfasst der Begriff des "Durchströmens" jedoch jegliche Art des Transports eines Kühlfluids, hier des ersten Kühlfluids, bei welchem dieses in thermischen Kontakt mit einem "durchströmten Element", hier der Fluidheizvorrichtung, gerät. Neben einem physikalischen Hindurchströmen ist somit also auch ein "Überströmen" und/oder "Entlangströmen" bzw. eine Strömung umfasst, bei welcher das erste Kühlfluid über eine oder mehrere Oberflächen, welche direkt oder indirekt der Fluidheizvorrichtung zugeordnet sind und einen Wärmeübertrag ermöglichen, entlangströmt. Auch komplexere, beispielsweise indirekte, Wärmeübertragungsmechanismen können genutzt werden und sollen vom Begriff "durchströmen" umfasst sein.

Unter einem "Kühlfluid" ist dabei hier wie im Folgenden beispielsweise wiederum ein flüssiges und/oder gasförmiges Medium zu verstehen, welches beispielsweise analog zum oben beschriebenen Reinigungsfluid ausgestaltet sein kann. Da das erste Kühlfluid in diesem Fall tatsächlich auch in einem nachfolgenden Schritt als Reinigungsfluid verwendet werden kann, kann das erste Kühlfluid beispielsweise wiederum ein wässriges Kühlfluid umfassen, beispielsweise Frischwasser mit einer Beimengung von Reinigungsmitteln und/oder Klarspüler.

Das vorgeschlagene Reinigungsgerät vereinigt somit die Vorteile bekannter Reinigungsgeräte mit Wärmerückgewinnungseinrichtung mit den Vorteilen der bekannten Peltiertrockner, wobei die Nachteile beider Systeme geschickt vermieden werden können. Die vergleichsweise geringen Wirkungsgrade der Peltierelemente werden dabei sogar indirekt vorteilhaft genutzt, da die entstehende Abwärme, zumindest teilweise, wiedergewonnen werden kann und dem Reinigungsgerät erneut zugeführt werden kann. Die wiedergewonnene Wärme kann direkt wieder in den Reinigungsprozess eingekoppelt werden, was vorzugsweise - bis auf unvermeidlich Isolationsverluste - vollständig erfolgen kann. Im Gegensatz zu Wärmerückgewinnungseinrichtungen mit reinen Flüssigwärmetauschern ist die Aufheizung des ersten Kühlfluids nach Durchströmen der Fluidheizvorrichtung nicht einfach durch Temperaturdifferenzen vorgegeben, sondern kann beispielsweise durch eine entsprechende Ansteuerung des Peltierelements eingestellt werden. Bei dieser Einstellung der Aufheizung durch das Peltierelement handelt es sich somit um eine Einstellung in einem aktiven Verfahren und nicht, wie in einem Wärmetauscher, um ein passives Verfahren. Insofern kann eine weitgehende Unabhängigkeit von beispielsweise Eingangstemperaturen des ersten Kühlfluids, wofür beispielsweise Frischwasser in Form von Kaltwasser verwendet werden kann, hergestellt werden. Das Abgabeniveau kann, im Gegensatz beispielsweise zu einer herkömmlichen Wärmepumpe, beeinflusst werden, ebenso die Temperatur auf der Aufnahmeseite. Insofern kann das Reinigungsgerät beispielsweise unter unterschiedlichen klimatischen Bedingungen betrieben werden, ohne dass die Funktionalität der Wärmerückgewinnungseinrichtung beeinträchtigt wird. In der Wärmerückgewinnungseinrichtung kann, gleichzeitig zu einer Abkühlung der feuchten Luft, auch eine zumindest weitgehende und zuverlässige Entfeuchtung stattfinden, so dass beispielsweise durch die Abluftöffnung Abluft an die Umgebung abgegeben werden kann, welche hinsichtlich Temperatur und/oder Feuchtigkeit vorgegebenen Grenzwerten entspricht. Da durch Peltierelemente eine effiziente Kühlung der feuchten Luft gewährleistet werden kann, kann das Reinigungsgerät insofern sogar zur Raumklimatisierung beitragen. Peltierelemente arbeiten zudem geräuschlos und vibrationsfrei und sind nahezu verschleißfrei betreibbar.

Unter einem "Peltierelement" ist dabei im Rahmen der vorliegenden Erfindung ein elektrothermischer Wandler zu verstehen, welcher auf einem oder mehreren der folgenden, physikalisch ähnlichen Effekte beruht: dem Peltier-Effekt, dem Thomson-Effekt, dem Seebeck-Effekt. Unabhängig davon, welcher dieser Effekte vorliegend dominiert, werden derartige thermoelektrischen Elemente im Rahmen der vorliegenden Erfindung als Peltierelemente bezeichnet. Allgemein umfasst der Begriff des Peltierelements also im Rahmen der vorliegenden Erfindung alle Arten thermoelektrischer Wandler.

Beispielsweise kann ein derartiges Peltierelement zwei oder mehr Halbleiter oder andere Festkörperelemente umfassen, die ein unterschiedliches Energieniveau hinsichtlich ihrer Leitungsbänder aufweisen. Wird ein elektrischer Strom durch zwei hintereinander liegende Kontaktstellen dieser Materialien geleitet, so wird an der einen Kontaktstelle Energie aufgenommen, damit Elektronen in das energetisch höher angeordnete Leitungsband des benachbarten Halbleitermaterials gelangen können. Es kommt hier somit zu einer Abkühlung. An der anderen Kontaktstelle bewegen sich Elektronen von einem höheren auf niedrigere Energieniveaus, so dass hier Energie in Form von Wärme abgegeben wird. Beispielsweise durch Einstellen des elektrischen Stromes kann eine Kühlleistung des Peltierelementes gesteuert werden, wobei übliche Peltierelemente typischerweise eine vorgegebene maximale Temperaturdifferenz zwischen beiden Seiten (Wärmeaufnahmeseite und Abwärmeseite) aufweisen. Beispielsweise kann, je nach Element und Strom, bei einstufigen Peltierelementen die Temperaturdifferenz bis ca. 60-70 Kelvin betragen. Erfindungsgemäß wird die an der Abwärmeseite auftretende Abwärme zumindest teilweise genutzt, so dass zum einen die in DE 198 13 924 A1 beschriebene Wasserwechselproblematik des wärmeaufnehmenden Volumens vermieden werden kann und dass zum anderen diese Abwärme sogar wieder genutzt werden kann.

Neben derartigen "klassischen" thermoelektrischen Elementen umfasst der Begriff des Peltierelements im Rahmen der vorliegenden Erfindung jedoch auch andere Arten thermoelektrischer Elemente, wie beispielsweise so genannte thermionische Konverter. Derartige thermionische Konverter beruhen auf der Erkenntnis, dass in klassischen thermoelektrischen Wandlern eingesetzte Materialien in der Regel nicht nur gute elektrische Eigenschaften aufweisen, sondern auch eine vergleichsweise hohe Wärmeleitfähigkeit. Diese Wärmeleitfähigkeit führt jedoch dazu, dass ein großer Teil der transportierten Wärme wieder zurückfließt zur eigentlich kalten Seite. Es stellt sich ein Gleichgewicht ein, welches den Wirkungsgrad der klassischen thermoelektrischen Elemente verringert. Thermionische Konverter, welche als Sonderfall thermoelektrischer Wandler anzusehen sind, verbessern den Wirkungsgrad durch Verwendung dünner Tunnelschichten, wie beispielsweise Spalten oder Abstände (gaps), in den Bauelementen, beispielsweise Abständen zwischen 0,2 und 5 Mikrometern. Während Elektronen diese Abstände durch Tunneln überwinden können, wirken diese Abstände als effiziente Barriere für die Wärmeleitung, so dass ein Rücktransport der Wärme erschwert wird. Das Gleichgewicht wird daher zugunsten einer Aufheizung der warmen Seite der Elemente verschoben, so dass insgesamt der Wirkungsgrad der thermoelektrischen Elemente ansteigt. Um das Tunneln der Elektronen zu erleichtern, werden im Bereich der gaps häufig unedle Materialien verwendet, also Materialien mit einer niedrigen Austrittsarbeit. Beispiele derartiger Materialien sind Alkali- und Erdalkalimetalle, oder so genannte Avto-Metalle. Moderne Beispiele derartiger thermionischer Konverter, wie sie im Rahmen der vorliegenden Erfindung einsetzbar sind und ebenfalls unter den Begriff der Peltierelemente fallen, sind die so genannten "Cool Chips" der Fa. Cool Chips plc. in Gibraltar. Es sei darauf hingewiesen, dass das mindestens eine Peltierelement auch mehrere, nach verschieden physikalischen Prinzipien arbeitende Elemente umfassen kann, beispielsweise eine Kombination aus "klassischen" Peltierelementen und Cool Chips.

Das erfindungsgemäße Reinigungsgerät kann vorteilhaft dadurch weitergebildet werden, dass die Wärmerückgewinnungseinrichtung mehrstufig aufgebaut wird. Diesem Gedanken liegt die Idee zugrunde, dass Peltierelemente, unabhängig von der Temperatur des zu kühlenden Mediums, das zu kühlende Medium abkühlen können, wobei die Abkühlung beispielsweise lediglich von dem angelegten Strom und/oder der Differenztemperatur zwischen Wärmeaufnahmeseite und Abwärmeseite abhängt. Im Gegensatz zu herkömmlichen, in Wärmerückgewinnungseinrichtungen verwendeten Flüssigkeitswärmetauschern, welche lediglich bei einer möglichst hohen Temperatur der feuchten Luft effizient arbeiten können, kann die Peltierkühlung also auch als nachgeschaltete Stufe in einer mehrstufigen Wärmerückgewinnungseinrichtung eingesetzt werden, um bereits teilweise abgekühlter feuchter Luft weiter Wärme zu entziehen.

Dementsprechend kann die Wärmerückgewinnungseinrichtung beispielsweise zusätzliche Wärmetauscher umfassen, welche ganz oder teilweise dem Peltierelement vorgeschaltet sein können. Beispielsweise können hierbei Kühlschlangen, Plattenwärmetauscher und/oder Berieselungswärmetauscher (beispielsweise analog zur US 3,598,131) zum Einsatz kommen. Besonders bevorzugt ist es, wenn die Wärmerückgewinnungseinrichtung mindestens einen ersten Fluidwärmetauscher aufweist, welcher derart eingerichtet ist, dass dieser der feuchten Luft eine erste Wärmemenge entzieht. Die Wärmeaufnahmeseite des Peltierelements ist dementsprechend eingerichtet, um der feuchten Luft eine zweite Wärmemenge zu entziehen. Wie oben beschrieben, ist dies aufgrund der Tatsache möglich, dass die "thermoelektrische Wärmepumpe" des Peltierelements auch bei bereits teilweise abgekühlter feuchter Luft arbeiten kann. Im Unterschied zu anderen Arten von Wärmepumpen, ist das Peltierelement jedoch schnell einsetzbar, ist jederzeit ab- und/oder zuschaltbar und erfordert lediglich einen geringen Bauraum. Zudem ist das Peltierelement, im Gegensatz zu Wärmepumpen, über den eingespeisten Strom vorzugsweise stufenlos regelbar.

Der erste Fluidwärmetauscher in dieser bevorzugten Ausgestaltung des Reinigungsgeräts kann insbesondere von dem ersten Kühlfluid durchströmt werden, wobei das erste Kühlfluid nach Durchströmen des ersten Fluidwärmetauschers die Fluidheizvorrichtung des Peltierelements durchströmt. Diese Ausgestaltung bewirkt, dass die erste Wärmemenge, welche in dem ersten Fluidwärmetauscher der feuchten Luft entzogen wird, vom ersten Kühlfluid aufgenommen wird. Anschließend wird in dieses erste Kühlfluid noch zusätzlich die vom Peltierelement übertragene zweite Wärmemenge hinzugefügt, so dass das erste Kühlfluid auf vergleichsweise hohe Temperaturen aufgeheizt werden kann. Im Gegensatz zu üblichen, reinen Flüssigkeitswärmetauschern kann somit das Kühlfluid bereits zumindest näherungsweise auf die in einer anschließenden Reinigung des Reinigungsguts benötigten Temperaturen oder sogar über diese Temperaturen hinaus aufgeheizt werden, so dass eine besonders hohe Energieeffizienz des Reinigungsgerätes gewährleistet werden kann.

Naturgemäß kann das oben beschriebene mehrstufige Prinzip der Wärmerückgewinnungseinrichtung auch erweitert werden, beispielsweise von dem beschriebenen einen ersten Fluidwärmetauscher, an welchen sich ein Peltierelement anschließt, auf mehrere, hintereinander geschaltete Fluidwärmetauscher und/oder mehrere, hintereinander geschaltete Peltierelemente.

Der erste Fluidwärmetauscher kann insbesondere mindestens eine von dem ersten Kühlfluid durchströmte offene Kühlfluidleitung umfassen. Diese offene Kühlfluidleitung kann an einem Abstromende mit der Fluidheizvorrichtung des Peltierelements verbunden sein. Weiterhin kann an einem Zustromende die Kühlfluidleitung mit einem Kaltwasseranschluss verbunden sein. Zwischen Zustromende und Abstromende kann der Fluidwärmetauscher beispielsweise Kühlschlangen, Kühlbleche (beispielsweise durchströmte und/oder überströmte Kühlbleche) und/oder andere Arten bekannter Wärmetauscher umfassen, welche eingerichtet sind, um der feuchten Luft die erste Wärmemenge zu entziehen.

Alternativ oder zusätzlich zu einem ersten Fluidwärmetauscher kann die Wärmerückgewinnungseinrichtung auch mindestens eine Wärmepumpe aufweisen. Diese mindestens eine Wärmepumpe umfasst vorzugsweise eine konventionelle Wärmepumpe, also eine Kompressorwärmepumpe, welche auf der Expansion und Kompression von Fluiden beruht. Auf diese Weise lässt sich durch Kombination der konventionellen Wärmepumpe mit dem mindestens einen Peltierelement eine optimale Anpassung der Wirkungsgrade erzielen, beispielsweise indem die konventionelle Wärmepumpe dem mindestens einen Peltierelement in einer Strömungsrichtung der feuchten Luft vorgeschaltet wird. Die mindestens eine konventionelle Wärmepumpe und Fluidheizvorrichtung können auch von demselben ersten Kühlfluid nacheinander durchströmt werden.

Die konventionelle Wärmepumpe ist auch mit dem oben beschriebenen mindestens einen ersten Fluidwärmetauscher kombinierbar, so dass die Wärmerückgewinnungseinrichtung auch den ersten Fluidwärmetauscher, die mindestens eine Wärmepumpe und das mindestens eine Peltierelement umfassen kann. Besonders bevorzugt ist diese Kombination, wenn die Wärmerückgewinnungseinrichtung kaskadiert aufgebaut ist. So kann diese nacheinander in einer Strömungsrichtung der feuchten Luft zunächst den mindestens einen ersten Fluidwärmetauscher, dann die mindestens eine Wärmepumpe und anschließend das mindestens eine Peltierelement (bzw., was hiervon begrifflich erfasst sein soll, eine mit dem Peltierelement thermisch in Kontakt stehenden zweiten Fluidwärmetauscher - siehe unten) umfassen. Diese Kaskade von Elementen der Wärmerückgewinnungseinrichtung kann insbesondere derart aufgebaut sein, dass der erste Fluidwärmetauscher, die Wärmepumpe und die Fluidheizvorrichtung des Peltierelements nacheinander von demselben ersten Kühlfluid durchströmt werden. Wie oben beschrieben, kann zu diesem Zweck beispielsweise eine Kühlfluidleitung verwendet werden, welche anströmseitig beispielsweise mit einem Kaltwasseranschluss verbunden sein kann.

Der Vorteil dieser Kombination einer konventionellen Wärmepumpe, insbesondere einer Kompressorwärmepumpe, mit dem Peltierelement und gegebenenfalls zusätzlich dem ersten Fluidwärmetauscher besteht insbesondere, wie oben beschrieben, in einer Möglichkeit einer Anpassung optimaler Wirkungsgrade. Insbesondere bei der Kaskadierung kann jedes der Elemente derart angeordnet und gewählt werden, dass dieses im Normalbetrieb des Reinigungsgeräts in seinem optimalen Arbeitsbereich arbeiten kann. So kann beispielsweise, wenn die feuchte Luft beim Eintritt in die Wärmerückgewinnungseinrichtung eine Temperatur von ca. 60°C hat, diese in dem mindestens einen passiven ersten Fluidwärmetauscher beispielsweise auf 40°C heruntergekühlt werden. Mittels der Kompressorwärmepumpe, welche auf diese Eingangstemperatur optimiert werden kann, kann dann eine weitere Kühlung auf beispielsweise 22 bis 26°C erfolgen. Mittels des mindestens einen Peltierelements kann dann wiederum eine weitere Kühlung auf beispielsweise 15 bis 20°C erfolgen, so dass beispielsweise ein Sättigungspunkt der Feuchtebeladung erreicht wird. Auf diese Weise lassen sich optimale Wirkungsgrade, und somit optimale Wärmerückgewinnungen und Entfeuchtungen erzielen.

Um insbesondere bei einer heruntergekühlten Abluft eine Kondensation von in der Umgebungsluft enthaltener Feuchte an der derart gekühlten und aus dem Reinigungsgerät ausgestoßenen Luft zu vermeiden, was wiederum als Nebelbildung wahrgenommen werden könnte, kann der feuchten Luft in der Wärmerückgewinnungseinrichtung zusätzlich vorzugsweise Raumluft beigemischt werden. Zu diesem Zweck kann die Wärmerückgewinnungseinrichtung beispielsweise eine Mischvorrichtung umfassen, welche der feuchten Luft vor Ausgabe in die Umgebung eine Raumluft beimischt. Beispielsweise kann die Mischvorrichtung diese Raumluft zunächst ansaugen, dann diese Raumluft der feuchten Luft vor, zwischen oder nach den oben genannten Elementen der Fluidwärmetauscher, der Wärmepumpe und des Peltierelements beimischen und anschließend diese Mischluft in die Umgebung entlassen. Besonders effektiv verhindert wird eine Nebelbildung, wenn die Beimischung in Strömungsrichtung der Abluft nach den oben genannten Elementen der Fluidwärmetauscher, der Wärmepumpe und des Peltierelements beigemischt wird. Die Beimischung kann beispielsweise unter Verwendung eines oder mehrerer Mischelemente erfolgen, beispielsweise Wirbelbildnern, Ventilatoren oder ähnlichem. Auf diese Weise lässt sich eine Belastung der Umgebungsluft zusätzlich vermindern.

Wie oben erwähnt, kann das mindestens eine Peltierelement direkt oder indirekt mit der feuchten Luft in Kontakt geraten, um dieser die zweite Wärmemenge zu entziehen. Unter einer "direkten" Kopplung kann dabei beispielsweise eine Kopplung verstanden werden, bei welcher die feuchte Luft beispielsweise unmittelbar die Wärmeaufnahmeseite des Peltierelements und/oder eine mit dieser Wärmeaufnahmeseite thermisch gekoppelte Fläche überströmt. Dies kann beispielsweise analog zur in der DE 198 13 924 A1 beschriebenen Ausgestaltung geschehen, in welcher die wärmeaufnehmende Fläche unmittelbar mit dem zu kühlenden Medium in Verbindung steht. Auch eine komplexere Ausgestaltung der unmittelbar von dem Peltierelement gekühlten Fläche ist denkbar, beispielsweise in Form einer ebenfalls in DE 198 13 924 A1 beschriebenen Ausgestaltung der Wärmeaufnahmeseite in Form großer Oberflächen, beispielsweise in Form von Kammern oder Zwischenräumen, welche von der feuchten Luft durchströmt werden können. Auf diese Weise ist eine besonders effiziente Wärmeübertragung möglich.

Besonders bevorzugt ist es im Rahmen der vorliegenden Erfindung jedoch, wenn der Wärmeübertrag von der feuchten Luft auf das Peltierelement ganz oder teilweise indirekt erfolgt. Zu diesem Zweck kann die Wärmerückgewinnungseinrichtung beispielsweise weiterhin mindestens einen zweiten Fluidwärmetauscher aufweisen, welcher von einem zweiten Kühlfluid durchströmt wird. Bezüglich der möglichen Ausgestaltungen dieses Kühlfluids kann beispielsweise auf die obige Beschreibung des ersten Kühlfluids verwiesen werden, wobei jedoch in diesem Fall auch eine unterschiedliche Ausgestaltung gewählt werden kann. Insbesondere ist es bevorzugt, wenn dieses zweite Kühlfluid anschließend nicht als Reinigungsfluid verwendet wird, so dass hinsichtlich der Auswahl geeigneter Materialien für dieses zweite Kühlfluid eine höhere Freiheit besteht.

Das zweite Kühlfluid steht vorzugsweise in mindestens einer Fluidkühlvorrichtung in thermischem Kontakt mit der Wärmeaufnahmeseite des Peltierelements. Dieser thermische Kontakt kann beispielsweise durch geeignete Wärmeübertragungselemente hergestellt werden. Auf diese Weise kann das zweite Kühlfluid beispielsweise zunächst die zweite Wärmemenge von der feuchten Luft aufnehmen, diese zweite Wärmemenge dann hin zu der Fluidkühlvorrichtung transportieren, wo dann diese zweite Wärmemenge an das Peltierelement übertragen wird. Der Wärmeübertrag zwischen feuchter Luft und Peltierelement erfolgt hiermit also indirekt.

Wie oben beschrieben, kann das mindestens eine Peltierelement auf unterschiedliche Weisen ausgestaltet sein. So können beispielsweise einzelne Peltierelemente eingesetzt werden, welche auch parallel nebeneinander geschaltet werden können, beispielsweise um die effektive Fläche der Wärmeaufnahmeseite und/oder der Abwärmeseite zu erhöhen (parallele Anordnung). Alternativ oder zusätzlich zu einer parallelen Anordnung einzelner Peltierelemente ist jedoch auch eine Stapelung mehrerer Peltierelemente möglich (gestapelte Anordnung). So können vorteilhaft auch mehrere Peltierelemente kaskadenartig in Peltierstapeln mit je einer Wärmeaufnahmeseite und je einer Abwärmeseite gestapelt angeordnet sein. Diese Anordnung erfolgt sinnvoller Weise derart, dass je eine Wärmeaufnahmeseite und je eine Abnahmeseite benachbarter Peltierelemente in thermischem Kontakt zueinander stehen. Auf diese Weise kann durch geeignete Stapelung der Peltierelemente beispielsweise die Temperaturdifferenz zwischen Abwärmeseite und Wärmeaufnahmeseite, welche erreichbar ist, erhöht werden.

Wenn Peltierstapel der beschriebenen Art eingesetzt werden, jedoch möglicherweise auch, wenn einzelne Peltierelemente ungestapelt eingesetzt werden, so ist eine im nachfolgenden beschriebene vorteilhafte Ausgestaltung möglich, bei welcher mehrere derartiger einzelner Peltierelemente und/oder Peltierstapel hinsichtlich ihrer Wärmeaufnahmeseiten und ihrer Abwärmeseiten alternierend angeordnet sind und zu einem Peltiermodul zusammengefasst sind. Unter einer "alternierenden Anordnung" sind dabei Anordnungen zu verstehen, bei welcher jeweils die Abwärmeseiten benachbarter Peltierstapel einander zuweisen und/oder bei welcher jeweils die Wärmeaufnahmeseiten benachbarter Peltierstapel einander zuweisen. Zwischen den Peltierstapeln können dann jeweils Wärmeaustauschbereiche angeordnet sein, welche mit den Peltierstapeln in thermischem Kontakt stehen. Unter "einander zuweisen" ist somit eine beliebige Anordnung zu verstehen, in welcher mindestens zwei Wärmeaufnahmeseiten verschiedener Peltierstapel einem Wärmeaustauschbereich zuweisen bzw. in welcher mindestens zwei Abwärmeseiten verschiedener Peltierstapel einem Wärmeaustauschbereich zuweisen, wobei natürlich auch komplexere Anordnungen als eine lineare Anordnung der Peltierstapel (beispielsweise sternförmige Anordnungen) denkbar sind. Dabei kann jeweils mindestens ein erster Wärmeaustauschbereich mit mindestens zwei Abwärmeseiten der Peltierstapel, welche an diesen ersten Wärmeaustauschbereich angrenzen, in thermischem Kontakt stehen. Jeweils mindestens ein zweiter Wärmeaustauschbereich kann derart angeordnet sein, dass dieser mit mindestens zwei Wärmeaufnahmeseiten der Peltierstapel in thermischem Kontakt steht. Auf diese Weise kann beispielsweise eine Schichtstruktur geschaffen werden, bei welchen jeweils Wärmeaustauschbereiche und Peltierstapel abwechselnd angeordnet sind. Dies kann beispielsweise im Rahmen eines lamellenartigen Aufbaus des Peltiermoduls geschehen, so dass eine besonders Platz sparende Bauweise bei gleichzeitig hoher Effizienz des Wärmeaustauschs möglich ist. Auch andere Arten des Aufbaus sind jedoch denkbar.

Der erste Wärmeaustauschbereich kann beispielsweise genutzt werden, um Wärme der Abwärmeseite einzelner Peltierelemente bzw. der Peltierstapel auf das erste Kühlfluid zu übertragen. So kann der erste Wärmeaustauschbereich beispielsweise mindestens einen Hohlraum umfassen. Dieser erste Hohlraum kann von dem ersten Kühlfluid durchströmt werden. Im Rahmen des beschriebenen lamellenartigen Aufbaus können diese Hohlräume beispielsweise als Hohlplatten ausgestaltet sein, welche von dem mindestens einen ersten Kühlfluid durchströmt werden, so dass eine hohle Fläche für den Wärmeaustausch zur Verfügung steht.

Entsprechend kann der mindestens eine zweite Wärmeaustauschbereich genutzt werden, um effizient Wärme von der feuchten Luft auf die Wärmeaufnahmeseiten der Peltierelemente bzw. der Peltierstapel zu übertragen. Wie oben beschrieben, kann dies beispielsweise dadurch erfolgen, dass der Zweite Wärmeaustauschbereich mindestens einen Hohlraum (beispielsweise wiederum einen oder mehrere Hohlräume von Hohlplatten) umfasst, welche unmittelbar von der feuchten Luft durchströmt werden. Alternativ oder zusätzlich kann jedoch wiederum auch ein indirekter Wärmeaustausch mittels eines zweiten Kühlfluids erfolgen. So kann das zweite Kühlfluid beispielsweise wiederum den mindestens einen Hohlraum des zweiten Wärmeaustauschbereichs (beispielsweise Hohlplatten) durchströmen, so dass ein besonders effizienter Wärmeübertrag stattfinden kann. Die Hohlplatten lassen sich beispielsweise dadurch erzeugen, dass zwei Platten eines gut wärmeleitenden Materials, wie beispielsweise Aluminium und/oder ein thermisch leitfähiger Kunststoff, mittels eines Abstandselements verbunden bzw. getrennt werden. Beispielsweise kann als Abstandselement ein Kunststoffspritzteil dienen, an welchem beispielsweise auch erforderlichen Dichtungen (beispielsweise einstückig, z.B. mittels eines Zwei-Komponenten-Spritzgießverfahrens) zur Abdichtung des Hohlraums angebracht sein können. Vorteilhaft ist der Hohlraum und/oder das Abstandselement derart ausgebildet, dass beispielsweise ein mäanderförmiger Hohlraum vorhanden ist, was die Kontaktzeit zwischen Kühlfluid und den Hohlplatten verlängert. Diese bevorzugte Ausführungsform kann alternativ oder zusätzlich auch auf die anderen, im Rahmen dieser Erfindung verwendeten Wärmetauscher übertragen werden.

Wie oben beschrieben, liegt ein besonderer Vorteil bei der Verwendung von Peltierelementen in Wärmerückgewinnungseinrichtungen darin, dass Peltierelemente, im Gegensatz beispielsweise zu herkömmlichen Wärmepumpen, flexibel zu- und/oder abschaltbar und/oder ansteuerbar und/oder regelbar, beispielsweise stufenlos regelbar, sind. Dies kann gezielt eingesetzt werden, um die Funktionalität der Wärmerückgewinnungseinrichtung zu steuern und/oder zu überwachen.

So kann beispielsweise die Wärmerückgewinnungseinrichtung mindestens einen Temperatursensor zum Erfassen einer Temperatur der feuchten Luft und/oder mindestens einen Feuchtigkeitssensor zum Erfassen einer Feuchtigkeit der feuchten Luft aufweisen. Dieser mindestens eine Temperatursensor bzw. Feuchtigkeitssensor kann an verschiedenen Stellen im Luftstrom der feuchten Luft angeordnet sein. So kann beispielsweise mindestens ein Temperatursensor und/oder Feuchtigkeitssensor vor dem bzw. den oben beschriebenen Wärmetauschern, innerhalb dieser Elemente und/oder diesen Elementen nachgeordnet angeordnet sein, so dass beispielsweise an verschiedenen Stellen Temperaturen erfasst werden können. Insbesondere kann eine Endtemperatur erfasst werden, welche beispielsweise die Temperatur der Abluft vor Abgabe in die Umgebung und/oder an eine Ablufteinrichtung (beispielsweise ein bauseitiges Abluftrohr) überwachen kann. Werden Grenzwerte überschritten, so können beispielsweise Warnungen an einen Benutzer ausgegeben werden und/oder aktiv Prozesse, beispielsweise Steuerungs- oder Regelungsprozesse, initiiert werden. Neben einem oder mehreren Temperatursensoren können, alternativ oder zusätzlich, auch andere Arten von Sensoren vorgesehen sein, beispielsweise Feuchtigkeitssensoren oder andere Arten von Sensoren.

Besonders bevorzugt ist es, wenn die Wärmerückgewinnungseinrichtung weiterhin mindestens eine elektronische Steuervorrichtung umfasst. Diese elektronische Steuervorrichtung, welche beispielsweise ganz und/oder teilweise in eine zentrale Steuereinrichtung des Reinigungsgeräts integriert sein kann, welche jedoch auch als autarke bzw. dezentrale Steuereinrichtung ausgestaltet sein kann, kann zum Steuern der Funktionalität der Wärmerückgewinnungseinrichtung eingesetzt werden. So kann diese elektronische Steuereinrichtung beispielsweise zum Steuern und/oder Regeln der Ablufttemperatur und/oder der Abluftfeuchtigkeit eingesetzt werden. Zu diesem Zweck kann die elektronische Steuervorrichtung beispielsweise eingerichtet sein, um eine Kühlleistung und/oder Heizleistung des mindestens einen Peltierelements zu steuern und/oder zu regeln. Beispielsweise kann entsprechend einem Steuer- und/oder Regelsignal ein durch das mindestens eine Peltierelement fließender elektrischer Strom gesteuert und/oder geregelt werden. Sind mehrere Peltierelemente vorgesehen, so können diese auch beispielsweise bedarfsweise einzeln oder in Gruppen zu- oder abgeschaltet werden und/oder einzeln oder in Gruppen durch eine individuelle Strombeaufschlagung geregelt werden, beispielsweise wiederum stufenlos. So kann die Wärmerückgewinnungseinrichtung mehrere Peltierelemente umfassen, wobei das Reinigungsgerät eingerichtet sein kann, um die Peltierelemente individuell oder in Gruppen zu steuern, insbesondere individuell oder Gruppen mit einem Strom zu beaufschlagen, und/oder individuell oder in Gruppen zu- und abzuschalten.

Wie oben beschrieben, ist die Erfindung insbesondere im Rahmen gewerblicher Reinigungsgeräte, insbesondere gewerblicher Geschirrspülmaschinen, einsetzbar. Insbesondere ist es bevorzugt, wenn der Fluidtank einen Boiler und/oder einen Durchlauferhitzer umfasst. Wie oben beschrieben, kann das Reinigungsgerät beispielsweise eine Durchlaufgeschirrspülmaschine mit mindestens einer Reinigungszone umfassen, wobei das Reinigungsgut diese mindestens eine Reinigungszone in einer Durchlaufrichtung durchläuft. Die mindestens eine Reinigungszone kann beispielsweise mindestens eine Pumpenklarspülzone und/oder eine Frischwasserklarspülzone umfassen, welche in der Regel eine besonders hohe Temperatur des Reinigungsfluids (Klarspülflüssigkeit) aufweist, beispielsweise eine Temperatur von ca. 85°C. Für die Wärmerückführung eignet sich daher insbesondere der Pumpenklarspültank der Pumpenklarspülzone und/oder eine Verwendung in der Frischwasserklarspülzone (beispielsweise in Form einer direkten Zuführung und/oder in Form einer Zuführung in einen Frischwasserklarspültank).

Neben der mindestens einen Reinigungszone kann die Durchlaufgeschirrspülmaschine weiterhin mindestens eine Trocknungszone aufweisen, welche vorzugsweise der mindestens einen Reinigungszone in Durchlaufrichtung nachgeordnet ist. Diese Trocknungszone kann insbesondere ein Gebläse aufweisen, um das Reinigungsgut mit Warmluft zu beaufschlagen. Besonders bevorzugt ist es in diesem Fall, wenn das Gebläse und die Absaugvorrichtung derart eingerichtet sind bzw. zusammenwirken, dass sich im Betrieb ein der Durchlaufrichtung entgegengerichteter Luftstrom in der Durchlaufgeschirrspülmaschine ausbildet. Diese Weiterbildung der Erfindung hat insbesondere den Vorteil, dass die feuchte Luft innerhalb der Reinigungszonen mit zunehmender Feuchtigkeitsaufnahme der Durchlaufrichtung entgegengesetzt geleitet wird, um schließlich, beispielsweise in einer ersten Reinigungszone, abgesaugt zu werden. Die feuchte Luft ist somit maximal mit Wasserdampf gesättigt, was für die Wärmerückgewinnung die günstigste Konstellation darstellt.

Neben dem Reinigungsgerät in einer der oben beschriebenen Ausführungsformen wird weiterhin ein Verfahren zur Wärmerückgewinnung in einem Reinigungsgerät vorgeschlagen. Dieses Verfahren ist insbesondere in einem Reinigungsgerät gemäß einer der oben beschriebenen Ausführungsformen einsetzbar, so dass für mögliche Ausführungsbeispiele des Reinigungsgeräts weitgehend auf die obige Beschreibung verwiesen werden kann. Auch in anderen Ausgestaltungen von Reinigungsgeräten ist das Verfahren jedoch prinzipiell einsetzbar.

Das Reinigungsgerät ist eingerichtet, um das Reinigungsgut mit mindestens einem Reinigungsfluid zu beaufschlagen, wobei das Reinigungsgerät mindestens eine Wärmerückgewinnungseinrichtung aufweist, welche eingerichtet ist, um der feuchten Luft Wärme zu entziehen. Wie oben beschrieben, weist die Wärmerückgewinnungseinrichtung mindestens ein Peltierelement auf, welches über mindestens eine Wärmeaufnahmeseite und mindestens eine Abwärmeseite verfügt. Das Verfahren wird derart durchgeführt, dass feuchter Luft aus dem Reinigungsgerät mittels der Aufnahmeseite Wärme entzogen wird, wobei die Abwärmeseite des Peltierelements mittels eines ersten Kühlfluids gekühlt wird. Dieses erste Kühlfluid wird anschließend in den Fluidtank geleitet, um die an der Abwärmeseite des Peltierelements aufgenommene Wärme zumindest teilweise dem Reinigungsgerät wieder zuzuführen. Dieses Kühlfluid kann anschließend beispielsweise für eine Reinigung des Reinigungsgutes verwendet werden. Diese Wiederverwendung kann beispielsweise kontinuierlich und/oder auch sequentiell erfolgen, je nach Ausgestaltung des Reinigungsgeräts.

Wie ebenfalls oben beschrieben, kann die Wärmerückgewinnung auch kaskadiert bzw. mehrstufig ausgebildet sein. So kann die Wärmerückgewinnungseinrichtung beispielsweise mindestens einen ersten Fluidwärmetauscher aufweisen, welcher eingerichtet ist, um der feuchten Luft eine erste Wärmemenge zu entziehen. Die Wärmeaufnahmeseite des Peltierelements kann eingerichtet sein, um der feuchten Luft eine zweite Wärmemenge zu entziehen, wobei das erste Kühlfluid zunächst den ersten Fluidwärmetauscher durchströmt und anschließend die Abwärmeseite des Peltierelements kühlt.

Wie ebenfalls oben beschrieben, kann das Verfahren weiterhin in vorteilhafter Weise derart weitergebildet werden, dass eine Temperatur und/oder eine Feuchtigkeit der feuchten Luft nach Durchströmen der Wärmerückgewinnungseinrichtung gesteuert und/oder geregelt wird, insbesondere indem mindestens eine Kühlleistung des Peltierelements gesteuert und/oder geregelt wird. Weiterhin kann das Verfahren derart durchgeführt werden, dass eine Temperatur an der Wärmeaufnahmeseite und/oder eine Temperatur an der Abwärmeseite gesteuert und/oder geregelt werden. Zu diesem Zweck können beispielsweise wiederum ein oder mehrere Temperaturfühler und/oder Feuchtigkeitsfühler vorgesehen sein. Unter "Steuern und/oder Regeln" kann dabei beispielsweise eine Einstellung auf einen Sollwert und/oder einen Sollbereich verstanden werden. So können beispielsweise Minimaltemperaturen, die nicht unterschritten werden dürfen und/oder Maximaltemperaturen, die nicht überschritten werden dürfen, vorgegeben werden und, beispielsweise von der elektronischen Steuerung, durch Einstellung beispielsweise eines oder mehrerer Ströme durch das Peltierelement geregelt/gesteuert werden. Insbesondere kann eine Temperatur des ersten Kühlfluids gesteuert und/oder geregelt werden, beispielsweise nach unten und/oder nach oben begrenzt werden. Auf diese Weise kann beispielsweise eine Überheizung des Fluidtanks vermieden werden. Alternativ oder zusätzlich kann, wie oben beschrieben, die Wärmerückgewinnungseinrichtung weiterhin den mindestens einen zweiten Fluidwärmetauscher aufweisen, welcher von dem zweiten Kühlfluid durchströmt wird, das in der mindestens einen Fluidkühlvorrichtung in thermischem Kontakt mit der Wärmeaufnahmeseite des Peltierelements steht. In diesem Fall kann beispielsweise auch eine Temperatur des zweiten Kühlfluids gesteuert und/oder geregelt werden, insbesondere nach unten und/oder nach oben begrenzt werden. Dies kann beispielsweise genutzt werden, um eine Vereisung des zweiten Fluidwärmetauschers zu vermeiden.

### Ausführungsbeispiele

Weitere Einzelheiten und Merkmale der Erfindung ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente.

Im Einzelnen zeigt:
- Figur 1: ein Ausführungsbeispiel eines Reinigungsgeräts in Form einer Durchlaufgeschirrspülmaschine;
- Figur 2: eine schematische Darstellung eines Ausführungsbeispiels einer Wärmerückgewinnungseinrichtung;
- Figur 3: ein mögliches Ausführungsbeispiel einer Peltier-Anordnung; und
- Figur 4: ein zu Figur 2 alternatives Ausführungsbeispiel einer Wärmerückgewinnungseinrichtung mit einer zusätzlichen Wärmepumpe.

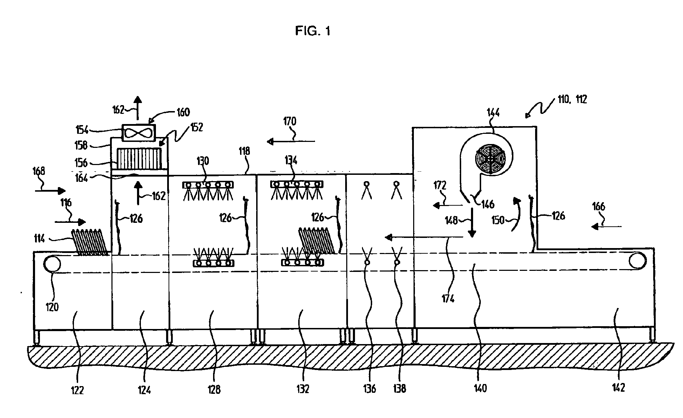

In Figur 1 ist ein mögliches Ausführungsbeispiel eines erfindungsgemäßen Reinigungsgeräts 110 dargestellt. Dieses Reinigungsgerät ist in diesem Ausführungsbeispiel als Durchlaufgeschirrspülmaschine 112 ausgestaltet. Für den Aufbau und die Funktionsweise dieser Durchlaufgeschirrspülmaschine 112 kann weitgehend auf die DE 10 2004 003 797 A1 verwiesen werden.

In der Durchlaufgeschirrspülmaschine 112 durchläuft Reinigungsgut 114 in einer Durchlaufrichtung 116 eine Reinigungskammer 118. Der Transport des Reinigungsguts erfolgt in der dargestellten Durchlaufgeschirrspülmaschine 112 mittels eines Transportbandes 120. Die Durchlaufgeschirrspülmaschine 112 ist somit als Bandtransport-Geschirrspülmaschine ausgestaltet.

An einem Einlauf 122 läuft auf der Oberseite des Transportbandes 120 aufgenommenes Reinigungsgut 114 in einen Einlauftunnel 124 ein. Der Einlauftunnel 124 ist mittels eines Trennvorhangs 126 nach außen abgeschirmt, um den Austritt von Dampfwrasen im Bereich des Einlauftunnels 124 der Durchlaufgeschirrspülmaschine 112 zu verhindern. Nachdem das an der Oberseite des Transportbandes 120 aufgenommene Reinigungsgut 114 den Einlauftunnel 124 passiert hat, tritt es in die Reinigungskammer 118 ein, welche in mehrere Reinigungszonen unterteilt ist. Zunächst wird das Reinigungsgut 114 in eine Vorspülzone 128 transportiert. Innerhalb der Vorspülzone 128 ist ein Vorspülsystem 130 angeordnet. Das Vorspülsystem 130 weist Sprührohre auf, welche an der Unterseite bzw. oberhalb des umlaufenden Transportbandes 120 angeordnet sind. Über eine in Figur 1 nicht dargestellte, in ihrer Leistung regelbare Pumpe wird das Vorspülsystem 130 je nach Verschmutzungsgrad des Reinigungsguts 114 mit Reinigungsfluid beaufschlagt. Die Vorspülzone 128 ist über einen weiteren Trennvorhang 126 von einer sich anschließenden Spülzone 132 getrennt. Nach Passage der Vorspülzone 128 läuft das Reinigungsgut 114 in die Spülzone 132 ein. Die Spülzone 132 umfasst ebenfalls ein Spülsystem, bezeichnet durch das Bezugszeichen 134. Das Spülsystem 134 ist oberhalb und unterhalb der Oberseite des umlaufenden Transportbandes 120 angeordnet. Die Spülzone 132 ist durch einen weiteren Trennvorhang 126 von einer Pumpenklarspülzone 136 getrennt, welche ein oberhalb und ein unterhalb der Oberseite des Transportbandes 120 angeordnetes Spülsystem in Gestalt von zwei einander gegenüberliegenden Sprührohren aufweist. An die Pumpenklarspülzone 136 schließt sich eine Frischwasserklarspülzone 138 an. Innerhalb der Frischwasserklarspülzone 138 wird das Reinigungsgut 114 mit Frischwasser abgespült um verbliebene Verunreinigungen bzw. das zuvor aufgebrachte Reinigungsfluid vor Eintritt des Reinigungsguts in eine Trocknungszone 140 von diesem zu entfernen. Der Frischwasserklarspülzone 138 nachgeschaltet befindet sich ein (in Figur 1 nicht dargestellter) weiterer Trennvorhang 126, welcher die Frischwasserklarspülzone 138 von der Trocknungszone 140 trennt.

Innerhalb der Trocknungszone 140, welcher eine Abnahmestrecke 142 nachgeschaltet ist, befindet sich ein Trocknungsgebläse 144. Das Trocknungsgebläse 144 saugt Luft an und erwärmt diese. Die im Trocknungsgebläse 144 erwärmte Luft tritt in einen Austrittstrichter 146 ein, an dessen unterem Ende sich eine Austrittsdüse befindet, welche die austretende Trocknungsluft auf das die Trocknungszone 144 passierende Reinigungsgut 114 lenkt. Unterhalb der Trocknungszone 144 kann eine Umlenkfläche vorgesehen sein, welche die in Austrittsrichtung 148 aus der Austrittsdüse austretende Warmluft in Strömungsrichtung 150 umlenkt, so dass diese teilweise wieder dem Trocknungsgebläse 144 zuströmt. In Durchlaufrichtung 116 des Reinigungsguts 114 gesehen, ist die Trocknungszone 144 über einen weiteren Trennvorhang 126 gegen die Abnahmestrecke 142 abgeschirmt.

Während des Transports des Reinigungsguts 114 durch die in Figur 1 dargestellte Durchlaufgeschirrspülmaschine 112 nimmt dessen Temperatur kontinuierlich zu. Von Raumtemperatur an steigt die Temperatur des Reinigungsguts 114 in der Vorspülzone 128 beispielsweise auf eine Temperatur von 40°C bis 45°C, in der sich daran anschließenden Spülzone 132 auf 55°C bis 65°C und in der sich daran anschließenden Pumpenklarspülzone 136 bzw. Frischwasserklarspülzone 138 auf eine Temperatur zwischen 60°C und 85°C an.

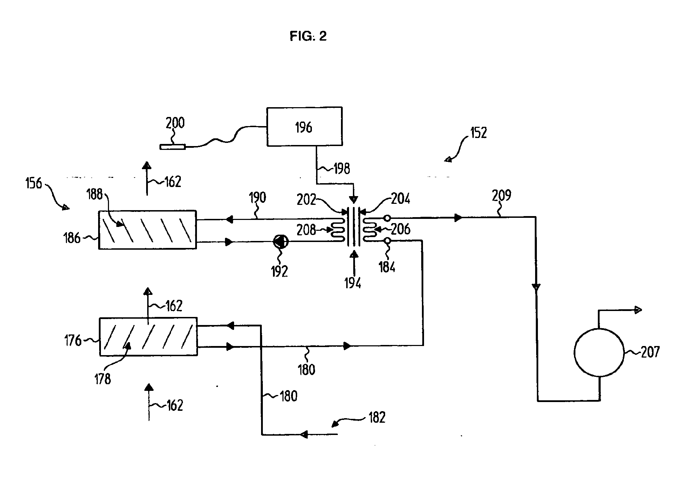

Die Durchlaufgeschirrspülmaschine 112 weist eine Wärmerückgewinnungseinrichtung 152 auf, welche ein Gebläse 154 und eine Wärmetauscheinrichtung 156 umfasst. Beide sind in einem Schacht 158 angeordnet, welcher in einer Abluftöffnung 160 mündet, in deren Bereich das Gebläse 154 angeordnet ist. Der Schacht 158 ist in diesem Ausführungsbeispiel im Bereich oberhalb des Einlauftunnels 124 angeordnet. Die Ausgestaltung der Wärmetauscheinrichtung 156 und der Wärmerückgewinnungseinrichtung 152 wird nachfolgend anhand der Figuren 1 und 2 näher erläutert. Über das der Wärmerückgewinnungseinrichtung 152 zugeordnete Gebläse 154 wird innerhalb der Durchlaufgeschirrspülmaschine 112 ein Unterdruck erzeugt, der die Absaugung eines Abluftstroms 162 an einer Absaugstelle 164 ermöglicht. Wie oben dargestellt, ist diese Absaugstelle 164 im vorliegenden Ausführungsbeispiel oberhalb des Einlauftunnels 124 angeordnet, wobei jedoch auch andere Ausgestaltungen möglich sind, beispielsweise Anordnungen der Absaugstelle 164 in einer oder mehreren der Reinigungszonen 128, 132, 136 oder 138. Durch die Absaugung des Abluftstroms 162 an der Absaugstelle 164 wird verhindert, dass am Einlauf 122 und an der Abnahmestrecke 142 Dampfwrasen aus der Durchlaufgeschirrspülmaschine 112 austreten. Dazu dienen einerseits die dort angeordneten Trennvorhänge 126 und andererseits das einen Unterdruck erzeugende Gebläse 154. Unterhalb der Trennvorhänge 126 am Einlauftunnel 124 und an der Abnahmestrecke 142 befinden sich spaltförmige Öffnungen, über welche jeweils Außenluftströme 166, 168 in die Durchlaufgeschirrspülmaschine 112 eintreten und welche dem Gesamtvolumen des Abluftstromes 162 entsprechen. Die Luftführung innerhalb der Durchlaufgeschirrspülmaschine 112 gemäß der Darstellung in Figur 1 ist derart gewählt, dass der Abluftstrom 162 die verschiedenen, vom Reinigungsgut 114 durchlaufenen Reinigungszonen 128, 132, 136, 138 entgegen der Durchlaufrichtung 116 durchströmt, wie durch das Bezugszeichen 170 angedeutet ist. Die Strömung 170 des Abluftstroms 162 wird einerseits durch das der Wärmerückgewinnungseinrichtung 152 zugeordnete Gebläse 154 und andererseits durch das Trocknungsgebläse 144 herbeigeführt. Vorzugsweise kann das Trocknungsgebläse 144 variabel ausgestaltet sein. Je nach Neigung der Austrittsdüsen des Trocknungsgebläses 144 kann beispielsweise aus der Trocknungszone 140 eine erste, kleinere Luftmenge 172 bzw. eine zweite größere Luftmenge 174 abgezogen werden. Diese Luftmengen 172, 174 können durch eine entsprechende Steuerung des Trocknungsgebläses 144 und des Gebläses 154 eingestellt werden, so dass keine Dampfwrasen aus der Durchlaufgeschirrspülmaschine 112 austreten können.

Für weitere mögliche Ausgestaltungen der Durchlaufgeschirrspülmaschine 112 sei beispielsweise auf die DE 10 2004 003 797 A1 verwiesen. Es sei jedoch darauf hingewiesen, dass die Reinigungsgeräte 110 auch auf andere Weise ausgestaltet sein können, beispielsweise mit einer einzelnen Reinigungskammer, welche mit einer Wärmerückgewinnungseinrichtung 152 ausgestattet ist. Auch eine Ausgestaltung mit mehreren Reinigungskammern, bei welchen jeweils eine oder mehrere Wärmerückgewinnungseinrichtungen vorgesehen sind, ist denkbar. Ein weiteres Beispiel einer möglichen Ausgestaltung des Reinigungsgeräts 110 ist eine Haubengeschirrspülmaschine. So könnte beispielsweise die Wärmerückgewinnungseinrichtung 152 gemäß Figur 2 (siehe unten) auch an einer Haube und/oder einer Rückwand und/oder in einem Untergestell einer Haubengeschirrspülmaschine, beispielsweise einer Durchschub-Haubengeschirrspülmaschine, angebracht sein. Für ein Beispiel derartiger Haubengeschirrspülmaschinen, in welchen die Wärmerückgewinnungseinrichtung 152 einsetzbar ist, ist in DE 10 2005 046 733 A1 beschrieben. Die Wärmerückgewinnungseinrichtung 152 könnte dort beispielsweise an Stelle oder zusätzlich zu dem dort offenbarten Wärmetauscher eingesetzt werden.

In Figur 2 ist ein mögliches Ausführungsbeispiel der Wärmerückgewinnungseinrichtung 152 schematisch dargestellt, welche beispielsweise in dem Reinigungsgerät 110 nach Figur 1 eingesetzt werden kann. Nicht dargestellt ist dabei das Gebläse 154, welches den Abluftstrom 162 warmer, feuchter Luft durch eine Wärmetauscheinrichtung 156 bewirkt und/oder eine andere Art der Einrichtung, welche den Austrag dieser feuchten Luft begünstigt.

Die Wärmetauscheinrichtung 156 umfasst einen ersten Fluidwärmetauscher 176, welcher in Figur 2 lediglich angedeutet ist. Dieser erste Fluidwärmetauscher 176 kann beispielsweise eine Vielzahl von ersten Wärmetauscherflächen 178 umfassen, welche beispielsweise in Form von Kühlschlangen, Kühlflächen, durchströmten und/oder überströmten Kühlblechen, Lamellen oder auf ähnliche, dem Fachmann bekannte Weise ausgestaltet sein können. Weiterhin weist der erste Fluidwärmetauscher 176 eine Kühlfluidleitung 180 mit einem Zustromende 182 und einem Abstromende 184 auf. Ein erstes Kühlfluid kann den ersten Fluidwärmetauscher 176 vom Abstromende 184 her durchströmen, durchströmt dann die ersten Wärmetauscherflächen 178, um schließlich zum Abstromende 184 zu strömen. Das Zustromende 182 kann beispielsweise mit einem Kaltwasseranschluss (Frischwasser) verbunden sein.

Die Wärmetauscheinrichtung 156 weist weiterhin einen zweiten Fluidwärmetauscher 186 auf. Dieser zweite Fluidwärmetauscher 186 kann grundsätzlich ähnlich zu dem ersten Fluidwärmetauscher 176 ausgestaltet sein und kann beispielsweise wiederum zweite Wärmetauscherflächen 188 aufweisen. Diese können beispielsweise wiederum durchströmte oder übersprühte Kühlflächen, Kühlschlangen, Lamellen oder ähnliche Arten von Wärmetauscherflächen aufweisen, wie sie auch in den ersten Wärmetauscherflächen 178 eingesetzt werden können. Der zweite Fluidwärmetauscher 186 umfasst einen von einem zweiten Kühlfluid durchströmten Wärmetauscherkreislauf 190, so dass der zweite Fluidwärmetauscher 186 insgesamt ein geschlossenes System bildet, in welchem ein zweites Kühlfluid zirkulieren kann. Diese Zirkulation kann beispielsweise durch eine Pumpe 192 in dem Wärmetauscherkreislauf 190 unterstützt werden. Es sei darauf hingewiesen, dass auch an anderen Stellen in der in Figur 2 dargestellten Wärmerückgewinnungseinrichtung 152 Pumpen, Ventile oder ähnliche, die Fluidbewegung vorantreibende bzw. steuernde Vorrichtungen aufgenommen seien können, welche in Figur 2 nicht dargestellt sind.

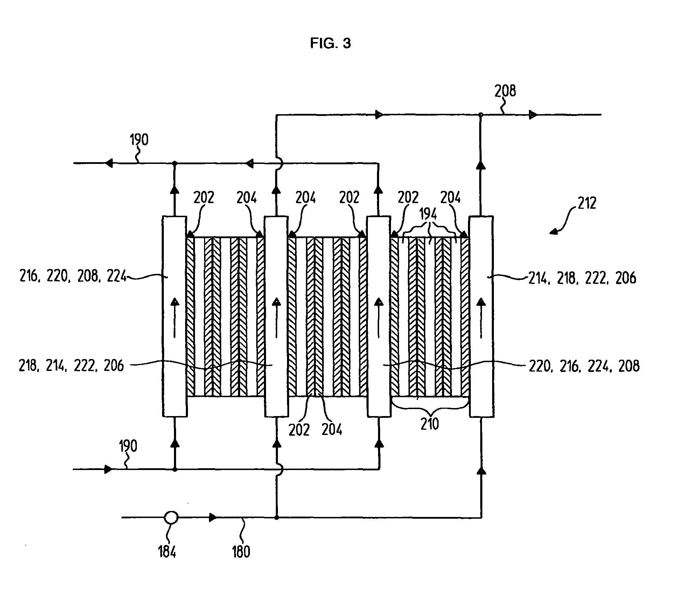

Weiterhin umfasst die Wärmetauschereinrichtung 156 Peltierelemente 194, welche in Figur 2 lediglich angedeutet sind und für deren genauen Aufbau beispielsweise auf die Figur 3 unten verwiesen werden kann. Die Peltierelemente 194 werden durch eine elektronische Steuervorrichtung 196 mit elektrischer Energie versorgt, beispielsweise mit einem elektrischen Strom beaufschlagt. Dies ist in Figur 2 symbolisch durch die Steuerleitung 198 angedeutet. Weiterhin ist optional die elektronische Steuervorrichtung 196 mit einem Temperatursensor 200 verbunden, beispielsweise einem temperaturabhängigen Messwiderstand, welcher im Abluftstrom 162 abstromseitig des zweiten Fluidwärmetauschers 186 angeordnet ist. Alternativ oder zusätzlich zu dieser Anordnung des Temperatursensors 200 können auch andere Anordnungen von Temperatursensoren und/oder Anordnungen von Feuchtigkeitssensoren (nicht dargestellt) gewählt werden, beispielsweise Anordnungen zwischen dem ersten Fluidwärmetauscher 176 und dem zweiten Fluidwärmetauscher 186 und/oder eine Anordnung vor dem ersten Fluidwärmetauscher 176.

Die Peltierelemente 194 weisen eine Wärmeaufnahmeseite 202 und eine Abwärmeseite 204 auf. Im Betrieb wirken die Peltierelemente 194 derart, dass Wärme von der Wärmeaufnahmeseite 202 zur Abwärmeseite 204 "gepumpt" wird (thermoelektrische Wärmepumpe).

Auf der Abwärmeseite 204 ist eine Fluidheizvorrichtung 206 vorgesehen, welche in Figur 2 lediglich symbolisch angedeutet ist und für deren Ausführung beispielsweise auf die Figur 3 verwiesen werden kann. Diese Fluidheizvorrichtung 206 ist mit dem Abstromende 184 der Kühlfluidleitung 180 verbunden, so dass die Fluidheizvorrichtung 206 von dem ersten Kühlfluid durchströmt werden kann. Die Fluidheizvorrichtung 206 steht in thermischem Kontakt mit der Abwärmeseite 204, so dass Wärme von dieser Abwärmeseite 204 auf das erste Kühlfluid übertragen werden kann. Über eine Ableitung 209 ist die Fluidheizvorrichtung 206 mit einem Fluidtank 207 verbunden. Dieser Fluidtank 207 kann beispielsweise als Boiler und/oder als Durchlauferhitzer ausgestaltet sein, kann jedoch auch ohne zusätzliche Heizvorrichtung ausgestaltet sein. Der Fluidtank 207 kann beispielsweise einer der oben beschriebenen Reinigungszonen 128, 132, 136, 138 zugeordnet sein, wobei eine Zuordnung zur Pumpenklarspülzone 136 und/oder zur Frischwasserklarspülzone 138 besonders bevorzugt ist. Insbesondere eine Zuordnung zur Frischwasserklarspülzone 138 ist von Vorteil, da hier die höchsten Temperaturen benötigt werden und da durch die Nutzung der Abwärme der feuchten Luft des Abluftstroms 162 zur Aufheizung des Fluidtanks 207 effizient eine Energieeinsparung vorgenommen werden kann.

Wie oben beschrieben ist hingegen der Wärmetauscherkreislauf 192 des zweiten Fluidwärmetauschers 186 als geschlossener Kreislauf ausgestaltet. Der Wärmetauscherkreislauf 190 ist verbunden mit einer Fluidkühlvorrichtung 208, welche in Figur 2 ebenfalls lediglich schematisch angedeutet ist und für deren beispielhafte Ausgestaltung auf Figur 3 verwiesen werden kann. In dieser Fluidkühlvorrichtung 208 kann zweites Wärmetauscherfluid, nach Durchströmen der zweiten Wärmetauscherflächen 188 und Aufnahme einer Wärmemenge aus dem Abluftstrom 162 diese aufgenommene zweite Wärmemenge an die Wärmeaufnahmeseite 202 der Peltierelemente 194 abgeben.

Die Wärmerückgewinnungseinrichtung 152 und deren Wärmetauscheinrichtung 156 sind also im vorliegenden Ausführungsbeispiel gemäß Figur 2 zweistufig ausgebildet. In dem ersten Fluidwärmetauscher 176 nimmt das durch die Kühlfluidleitung 180 strömende erste Kühlfluid eine erste Wärmemenge auf. In dem zweiten Fluidwärmetauscher 186 überträgt die feuchte Luft des nunmehr bereits leicht abgekühlten Abluftstroms 162 eine zweite Wärmemenge auf das durch den Wärmetauscherkreislauf 190 zirkulierende zweite Kühlfluid. Diese zweite Wärmemenge wird, zusätzlich zu Abwärmeleistungen der Peltierelemente 194 und abzüglich von Verlustwärmemengen durch die Peltierelemente 194, zusätzlich auf das durch die Kühlfluidleitung 180 strömende erste Kühlfluid übertragen, so dass dieses zusätzlich aufgeheizt wird.

Beispielsweise kann die feuchte Luft des Abluftstroms 162 vor Eintritt in die Wärmetauschereinrichtung 156 eine Temperatur im Bereich zwischen 80 und 90°C aufweisen. Auf Seiten des Zustromendes 182 kann das erste Kühlfluid, beispielsweise Kaltwasser, eine Temperatur von beispielsweise 10°C aufweisen. Auf Seiten des Abstromendes 184, also nach Durchtritt durch die ersten Wärmetauscherflächen 178, kann das erste Fluid auf eine Temperatur von ca. 60°C aufgeheizt sein. Nach Durchtritt durch die Fluidheizvorrichtung 206 kann das erste Kühlfluid schließlich auf Temperaturen von 70°C bis hin zu 85°C oder mehr aufgeheizt sein, so dass eine optimale Temperatur in der Ableitung 209 zu dem Fluidtank 207 erreicht ist. Das zweite Kühlfluid in dem Wärmetauscherkreislauf 190 kann beispielsweise vor Durchströmen der zweiten Wärmetauscherflächen 188, bedingt durch die Kühlung in der Fluidkühlvorrichtung 208, eine Temperatur von ca. 10°C aufweisen. In den zweiten Wärmetauscherflächen 188 wird dieses zweite Kühlfluid dann leicht erwärmt, beispielsweise auf eine Temperatur von 12°C. Im Gegensatz zu reinen Flüssigkeitswärmetauschem reicht dieses leichte Erwärmung und Aufnahme einer zweiten Wärmemenge aus, um durch die Peltierelemente 194 an das erste Kühlfluid übertragen zu werden. Abstromseitig kann der Abluftstrom 162 nach Austritt aus dem zweiten Fluidwärmetauscher 186 beispielsweise eine Temperatur von 15°C einstellen. Diese Temperatur kann beispielsweise gesteuert und/oder geregelt werden, unabhängig von der Eingangstemperatur des Abluftstroms 162 und/oder unabhängig von der Eingangstemperatur des ersten Kühlfluids an dem Zustromende 182. Zu diesem Zweck kann die elektronische Steuervorrichtung 196 beispielsweise, entsprechend dem Signal des Temperatursensors 200, die Peltierelemente 194 entsprechend ansteuern, um die Kühlleistung zu erhöhen oder zu senken.

Es sei darauf hingewiesen, dass die genannten Zahlenwerte lediglich beispielhaft zu verstehen sind, und dass auch andere Ausgestaltungen der Temperaturen möglich sind. Alternativ oder zusätzlich zu der hier dargestellten zweistufigen Ausgestaltung der Wärmerückgewinnungseinrichtung 152 sind auch Kaskaden mit mehr als zwei Stufen denkbar, beispielsweise indem weitere Fluidwärmetauscher vorgesehen werden.

In Figur 3 ist eine vergrößerte Darstellung der Peltierelemente 194 sowie der Fluidheizvorrichtung 206 und der Fluidkühlvorrichtung 208 gezeigt, welche beispielsweise in Figur 2 eingesetzt werden kann. Dabei ist gezeigt, dass die einzelnen Peltierelemente 194 in diesem Ausführungsbeispiel zu Peltierstapeln 210 zusammengesetzt sind. Jeder Peltierstapel 210 enthält in diesem Ausführungsbeispiel beispielhaft drei Peltierelemente 194, wobei diese Peltierelemente 194 derart zusammengesetzt sind, dass die jeweils eine Wärmeaufnahmeseite 202 eines ersten Peltierelements 194 an eine Abwärmeseite 204 eines benachbarten Peltierelements 194 angrenzt ("head-to-tail-Anordnung"). Auf diese Weise weist dementsprechend jeder Peltierstapel 210 eine Abwärmeseite 204 und eine Wärmeaufnahmeseite 202 auf. Die Anordnung mehrerer Peltierelemente 194 in Peltierstapeln 210 ermöglicht eine höhere Temperaturdifferenz zwischen Abwärmeseite 204 und Wärmeaufnahmeseite 202 als dies mit einzelnen Peltierelementen 194 möglich wäre. Bei dem Ausführungsbeispiel gemäß Figur 3 sind wiederum mehrere Peltierstapel 210 (in diesem Fall drei Peltierstapel 210) zu einem Peltiermodul 212 zusammengefasst. Dabei sind in diesem Ausführungsbeispiel die drei Peltierstapel 210 in einer "head-to-head"-Anordnung zueinander orientiert, so dass beispielsweise die Abwärmeseite 204 des linken Peltierstapels 210 der Abwärmeseite 204 des mittleren Peltierstapels 210 zuweist. Die Wärmeaufnahmeseite 202 des mittleren Peltierstapels 210 weist wiederum der Wärmeaufnahmeseite 202 des rechten Peltierstapels 210 zu. An den Außenseiten und zwischen den Peltierstapeln 210 sind dabei jeweils Tauscherplatten 214, 216 angeordnet, welche alternierend erste Wärmeaustauschbereiche 218 bzw. zweite Wärmeaustauschbereiche 220 bilden. Während die ersten Tauscherplatten 214 bzw. die ersten Wärmeaustauschbereich 218 mit den Abwärmeseiten 204 der Peltierstapel 210 in thermischem Kontakt stehen, stehen die zweiten Tauscherplatten 216 bzw. die zweiten Wärmeaustauschbereiche 220 in thermischem Kontakt mit den Wärmeaufnahmeseiten 202 der Peltierstapel 210. Die Tauscherplatten 214, 216 weisen ersten bzw. zweite Hohlräume 222, 224 auf, welche von dem ersten Kühlfluid bzw. dem zweiten Kühlfluid durchflossen werden können. Entsprechend sind die ersten Hohlräume 222 mit der Kühlfluidleitung 180 bzw. der Ableitung 209 verbunden, wohingegen die zweiten Hohlräume 224 mit dem Wärmetauscherkreislauf 190 verbunden sind. Die ersten Wärmeaustauschbereiche 218 bilden somit die Fluidheizvorrichtung 206 wohingegen die zweiten Wärmeaustauschbereiche 220 die Fluidkühlvorrichtung 208 bilden.

Die Peltierstapel 210 und die Tauscherplatten 214, 216 können beispielsweise durch in Figur 3 nicht dargestellte Verbindungselemente zusammengehalten werden, beispielsweise Verschraubungen, Klammern oder ähnliches. Auf diese Weise kann eine effiziente Wärmeübertragung von dem zweiten Kühlfluid auf das erste Kühlfluid unter Zwischenschaltung der Peltierelemente 194 erfolgen.

Es sei darauf hingewiesen, dass die in Figur 3 dargestellte Anordnung der Peltierelemente 194 lediglich eines von vielen möglichen Ausführungsbeispielen darstellt. Auch andere Anordnungen sind denkbar, beispielsweise Anordnungen, in welchen mehrere Peltierelemente 194, alternativ oder zusätzlich zu einer Stapelung, nebeneinander angeordnet sind, um möglichst große Austauschflächen für eine Wärmeübertragung zu bilden. Auf diese Weise können Module hergestellt werden, welche beispielsweise Flächen mit Kantenlängen von einigen 10 cm bilden können. Neben der oben beschriebenen "head-to-head"-Anordnung sind auch nichtlineare Anordnungen, beispielsweise sternförmige Anordnungen, denkbar. Weiterhin kann auch eine andere Art der Durchströmung der Peltiermodule 212 gewählt werden, und es können weitere Vorrichtungen vorgesehen sein, um die Oberfläche zusätzlich zu erhöhen. Auf diese Weise lässt sich die Effizienz der Wärmeübertragung zusätzlich durch eine geeignete Anordnung verbessern.

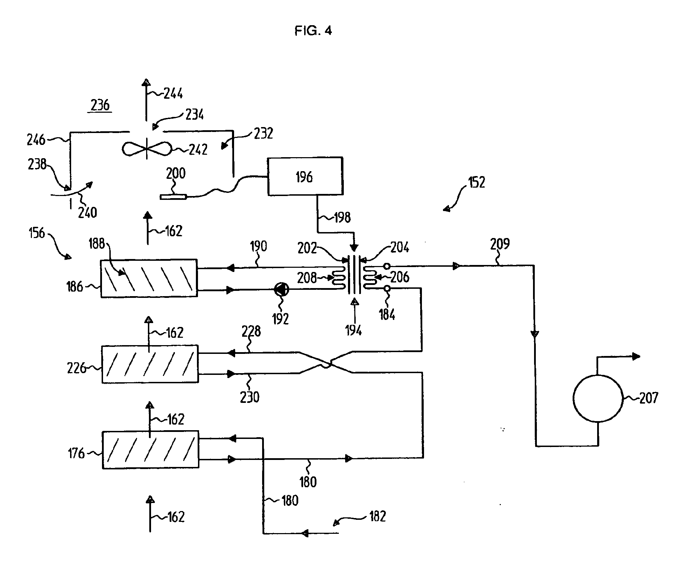

In Figur 4 ist ein zu Figur 2 alternatives Ausführungsbeispiel einer Wärmerückgewinnungseinrichtung 152 schematisch dargestellt. Diese Wärmerückgewinnungseinrichtung 152 entspricht zunächst im Wesentlichen der Wärmerückgewinnungseinrichtung 152 gemäß Figur 2, so dass weitgehend bezüglich möglicher Ausgestaltungen und Details sowie bezüglich der Funktionsweise auf die Beschreibung zur Figur 2 verwiesen werden kann.

Im Unterschied zur Ausgestaltung gemäß Figur 2 ist jedoch bei der Wärmerückgewinnungseinrichtung 152 gemäß Figur 4 zusätzlich eine konventionelle Wärmepumpe 226 vorgesehen, beispielsweise eine Kompressorwärmepumpe. Der erste Fluidwärmetauscher 176, also der passive Wärmetauscher, die Wärmepumpe 226 und der zweite Fluidwärmetauscher 186 sind dabei bezüglich der Strömungsrichtung des Abluftstroms 162 kaskadiert hintereinander geschaltet.

Die durch die Wärmepumpe 226 rückgewonnene Wärmemenge könnte separat dem Reinigungsgerät 110 wieder zugeführt werden, beispielsweise über ein entsprechendes Kühlfluid und eine separate Kühlfluidleitung. Besonders vorteilhaft ist es jedoch, wenn das erste Kühlfluid auch für die Abfuhr der durch die Wärmepumpe 226 gewonnenen Wärme genutzt wird, so dass dieses erste Kühlfluid in der Kühlfluidleitung 180 nacheinander durch den ersten Fluidwärmetauscher 176, die Wärmepumpe 226 und den zweiten Fluidwärmetauscher 186 bzw. die Fluidheizvorrichtung 206 und die Peltierelemente 194 aufgeheizt wird, um eine schrittweise Erwärmung dieses ersten Kühlfluids zu ermöglichen und eine optimale Anpassung der Wirkungsgrade der einzelnen Elemente der Wärmerückgewinnungseinrichtung 152 an die aktuelle Temperatur des Kühlfluids zu ermöglichen.

Zu diesem Zweck ist die Wärmerückgewinnungseinrichtung 152 gemäß dem Ausführungsbeispiel in Figur 4 derart ausgestaltet, dass das erste Kühlfluid zunächst den ersten Fluidwärmetauscher 176, dann die Wärmepumpe 226 und schließlich die Fluidheizvorrichtung 206 durchströmt. Die Wärmepumpe 226 ist somit in die Kühlfluidleitung 180 eingebunden, so dass ein Zustrom 228 der Wärmepumpe 226 mit dem ersten Fluidwärmetauscher 176, und ein Abstrom 230 der Wärmepumpe 226 mit der Fluidheizvorrichtung 206 verbunden ist.

Auf diese Weise lässt sich, wie oben dargestellt, der Strom der feuchten Luft 162 aus dem Reinigungsgerät 110 beispielsweise zunächst in dem passiven ersten Fluidwärmetauscher 176 von ca. 60° auf beispielsweise 35 bis 45°C, vorzugsweise ca. 40°C, herunterkühlen. In der Wärmepumpe 226 kann dann ein weiteres Abkühlen, beispielsweise auf eine Temperatur zwischen 20 und 30°C, beispielsweise 22 bis 26°C, erfolgen. Mittels der Peltierelemente 194 bzw. des zweiten Fluidwärmetauschers 186 kann dann eine weitere Abkühlung, beispielsweise auf eine Temperatur von 15 bis 20°C, insbesondere ca. 15 bis 18°C, erfolgen.

Weiterhin ist in Figur 4 eine optionale Ausgestaltung der Wärmerückgewinnungseinrichtung 152 dargestellt, welche beispielsweise auch in dem Beispiel gemäß Figur 2 realisiert werden könnte und welche unabhängig von dem Vorhandensein der Wärmepumpe 226 und des ersten Fluidwärmetauschers 176 eingesetzt werden könnte. Diese Option umfasst eine Mischvorrichtung 232, welche in Figur 4 lediglich schematisch angedeutet ist. Diese Mischvorrichtung soll insbesondere eine Nebelbildung an einem Auslass 234 verhindern, wenn zu stark abgekühlte Luft in die Umgebung 236 entlassen wird. Zu diesem Zweck weist die Mischvorrichtung eine Umgebungsluftansaugung 238 auf, durch welche Umgebungsluft 240 in die Mischvorrichtung 232 angesaugt werden kann. Diese Umgebungsluftansaugung 238 kann beispielsweise, wie in Figur 4 dargestellt, eine einfache Öffnung umfassen, in welche, beispielsweise mittels eines Gebläses 242, Umgebungsluft 240 angesaugt wird. Innerhalb der Mischvorrichtung 232 erfolgt dann eine Durchmischung der Luft 162 aus dem Reinigungsgerät 110 mit der Umgebungsluft 240. Auch diese Durchmischung kann beispielsweise durch das Gebläse 242 erfolgen, wobei jedoch auch separate Mischvorrichtungen, beispielsweise in Form von separaten Verwirblern, Gebläsen, Ventilatoren oder ähnlichem vorgesehen sind. Auf diese Weise kann relative Feuchtigkeit des Abluftstroms 244, welcher anschließend in die Umgebung 236 ausgestoßen bzw. ausgelassen wird, erheblich vermindert werden. Auch die Temperatur kann auf diese Weise an die Temperatur der Umgebung 236 angepasst werden, so dass eine Nebelbildung vermindert oder ganz vermieden werden kann.

Die Mischvorrichtung 232 kann beispielsweise ein eigenes Gehäuse 246 umfassen und kann beispielsweise als separater Aufsatz, gemeinsam oder getrennt mit der Wärmerückgewinnungseinrichtung 152, auf das Reinigungsgerät 110 aufgesetzt und/oder an diesem montiert werden.

### Bezugszeichenliste

- 110: Reinigungsgerät
- 112: Durchlaufgeschirrspülmaschine
- 114: Reinigungsgut
- 116: Durchlaufrichtung
- 118: Reinigungskammer
- 120: Transportband
- 122: Einlauf
- 124: Einlauftunnel
- 126: Trennvorhang
- 128: Vorspülzone
- 130: Vorspülsystem
- 132: Spülzone
- 134: Spülsystem
- 136: Pumpenklarspülzone
- 138: Frischwasserklarspülzone
- 140: Trocknungszone
- 142: Abnahmestrecke
- 144: Trocknungsgebläse
- 146: Austrittstrichter
- 148: Austrittsrichtung
- 150: Strömungsrichtung
- 152: Wärmerückgewinnungseinrichtung
- 154: Gebläse
- 156: Wärmetauscheinrichtung
- 158: Schacht
- 160: Abluftöffnung
- 162: Abluftstrom
- 164: Absaugstelle
- 166: Außenluftströme
- 168: Außenluftströme
- 170: Strömung
- 172: kleinere Luftmenge
- 174: größere Luftmenge
- 176: erster Fluidwärmetauscher
- 178: erste Wärmetauscherflächen
- 180: Kühlfluidleitung
- 182: Zustromende
- 184: Abstromende
- 186: zweiter Fluidwärmetauscher
- 188: zweite Wärmetauscherflächen
- 190: Wärmetauscherkreislauf
- 192: Pumpe
- 194: Peltierelemente
- 196: elektronische Steuervorrichtung
- 198: Steuerleitung
- 200: Temperatursensor
- 202: Wärmeaufnahmeseite
- 204: Abwärmeseite
- 206: Fluidheizvorrichtung
- 207: Fluidtank
- 208: Fluidkühlvorrichtung
- 209: Ableitung
- 210: Peltierstapel
- 212: Peltiermodul
- 214: erste Tauscherplatten
- 216: zweite Tauscherplatten
- 218: erste Wärmeaustauschbereiche
- 220: zweite Wärmeaustauschbereiche
- 222: erste Hohlräume
- 224: zweite Hohlräume
- 226: Wärmepumpe
- 228: Zustrom
- 230: Abstrom
- 232: Mischvorrichtung
- 234: Auslass
- 236: Umgebung
- 238: Umgebungsluftansaugung
- 240: Umgebungsluft
- 242: Gebläse
- 244: Abluftstrom
- 246: Gehäuse

## Patentansprüche

1. Reinigungsgerät (110) zur Reinigung von Reinigungsgut (114), wobei das Reinigungsgerät (110) eingerichtet ist, um das Reinigungsgut (114) in mindestens einer Reinigungskammer (118) mit mindestens einem Reinigungsfluid zu beaufschlagen, wobei das Reinigungsgerät (110) mindestens einen Fluidtank (207) zur Bevorratung des Reinigungsfluids aufweist, wobei das Reinigungsgerät (110) eine Absaugvorrichtung (154) zum Absaugen von feuchter Luft aus der Reinigungskammer (118) aufweist, wobei das Reinigungsgerät (110) mindestens eine Wärmerückgewinnungseinrichtung (152) aufweist, wobei die Wärmerückgewinnungseinrichtung (152) eingerichtet ist, um der feuchten Luft Wärme zu entziehen, **dadurch gekennzeichnet, dass** die Wärmerückgewinnungseinrichtung (152) mindestens ein Peltierelement (194) aufweist, wobei das Peltierelement (194) eine Wärmeaufnahmeseite (202) und eine Abwärmeseite (204) aufweist, wobei die Abwärmeseite (204) mit einer Fluidheizvorrichtung (206) in thermischem Kontakt steht, wobei die Fluidheizvorrichtung (206) mit einem ersten Kühlfluid in Kontakt steht und eingerichtet ist, um dieses zu erwärmen, und wobei das Reinigungsgerät (110) weiter eingerichtet ist, um das erste Kühlfluid für einen Reinigungsprozess zu verwenden, wobei die Wärmerückgewinnungseinrichtung (152) weiterhin mindestens einen zweiten Fluidwärmetauscher (186) aufweist, wobei der zweite Fluidwärmetauscher (186) von einem zweiten Kühlfluid durchströmt wird und das zweite Kühlfluid in mindestens einer Fluidkühlvorrichtung (208) in thermischen Kontakt mit der Wärmeaufnahmeseite (202) des Peltierelements (194)steht.

2. Reinigungsgerät (110) nach dem vorhergehenden Anspruch, wobei die Wärmerückgewinnungseinrichtung (152) mindestens einen ersten Fluidwärmetauscher (176) aufweist, wobei der erste Fluidwärmetauscher (176) eingerichtet ist, um der feuchten Luft eine erste Wärmemenge zu entziehen, wobei die Wärmeaufnahmeseite (202) des Peltierelements (194) eingerichtet ist, um der feuchten Luft eine zweite Wärmemenge zu entziehen.

3. Reinigungsgerät (110) nach dem vorhergehenden Anspruch, wobei der erste Fluidwärmetauscher (176) von dem ersten Kühlfluid durchströmt wird, wobei das erste Kühlfluid nach Durchströmen des ersten Fluidwärmetauschers (176) die Fluidheizvorrichtung (206) durchströmt.

4. Reinigungsgerät (110) nach einem der beiden vorhergehenden Ansprüche, wobei der erste Fluidwärmetauscher (176) mindestens eine von dem ersten Kühlfluid durchströmte offene Kühlfluidleitung (180) umfasst, wobei ein Abstromende (184) der Kühlfluidleitung (180) mit der Fluidheizvorrichtung (206) verbunden ist.

5. Reinigungsgerät (110) nach dem vorhergehenden Anspruch, wobei ein Zustromende (182) der Kühlfluidleitung (180) mit einem Kaltwasseranschluss verbunden ist.

6. Reinigungsgerät (110) nach einem der vorhergehenden Ansprüche, wobei die Wärmerückgewinnungseinrichtung (152) mindestens eine Wärmepumpe (226) aufweist, wobei die Wärmepumpe (226) eingerichtet ist, um der feuchten Luft (162) eine dritte Wärmemenge zu entziehen.

7. Reinigungsgerät (110) nach einem der vorhergehenden Ansprüche, wobei die Wärmerückgewinnungseinrichtung (152) mindestens einen ersten Fluidwärmetauscher (176), mindestens eine Wärmepumpe (226), insbesondere eine Kompressorwärmepumpe, und das mindestens eine Peltierelement (194) umfasst.

8. Reinigungsgerät (110) nach dem vorhergehenden Anspruch, wobei die Wärmerückgewinnungseinrichtung kaskadiert aufgebaut ist und nacheinander in einer Strömungsrichtung der feuchten Luft (162) den mindestens einen ersten Fluidwärmetauscher (176), die mindestens eine Wärmepumpe (226) und das mindestens eine Peltierelement (194) umfasst.

9. Reinigungsgerät (110) nach dem vorhergehenden Anspruch, wobei der erste Fluidwärmetauschers (176) von dem ersten Kühlfluid durchströmt wird, wobei das erste Kühlfluid nach Durchströmen des ersten Fluidwärmetauschers (176) die Wärmepumpe (226) durchströmt und wobei das erste Kühlfluid nach Durchströmen der Wärmepumpe (226) die Fluidheizvorrichtung (206) durchströmt.

10. Reinigungsgerät (110) nach einem der vorhergehenden Ansprüche, wobei die Wärmerückgewinnungseinrichtung (152) weiterhin mindestens eine Mischvorrichtung (232) umfasst, wobei die Mischvorrichtung (232) eingerichtet ist, um der feuchten Luft (162) vor Ausgabe in die Umgebung (236) eine Umgebungsluft (240) beizumischen.

11. Reinigungsgerät (110) nach dem vorhergehenden Anspruch, wobei der zweite Fluidwärmetauscher (186) einen von dem zweiten Kühlfluid durchströmten Wärmetauscherkreislauf (190) aufweist, wobei der Wärmetauscherkreislauf mindestens einen mit der feuchten Luft in Kontakt stehenden Wärmetauscherbereich (188) und die Fluidkühlvorrichtung (208) umfasst.

12. Reinigungsgerät (110) nach einem der vorhergehenden Ansprüche, wobei mehrere Peltierelemente (194) kaskadenartig in Peltierstapeln (210) mit je einer Wärmeaufnahmeseite (202) und je eine Abwärmeseite (204) gestapelt angeordnet sind.

13. Reinigungsgerät (110) nach dem vorhergehenden Anspruch, wobei mehrere Peltierstapel (210) bezüglich ihrer Wärmeaufnahmeseiten (202) und ihrer Abwärmeseiten (204) alternierend angeordnet sind und zu einem Peltiermodul (212) zusammengefasst sind, wobei zwischen den Peltierstapeln (210) jeweils Wärmeaustauschbereiche angeordnet sind, wobei jeweils mindestens ein erster Wärmeaustauschbereich (218) mit mindestens zwei Abwärmeseiten (204) der Peltierstapel (210) in thermischem Kontakt steht und wobei jeweils mindestens ein zweiter Wärmeaustauschbereich (220) mit mindestens zwei Wärmeaufnahmeseiten (202) der Peltierstapel (210) in thermischem Kontakt steht.

14. Reinigungsgerät (110) nach dem vorhergehenden Anspruch, wobei der erste Wärmeaustauschbereich (218) und/oder der zweite Wärmeaustauschbereich (220) mindestens einen Hohlraum (222, 224) umfassen, wobei der Hohlraum (222) des ersten Wärmeaustauschbereichs (218) von dem ersten Kühlfluid durchströmt wird.

15. Reinigungsgerät (110) nach einem der Ansprüche 12 bis 14 und nach einem der Ansprüche 1 oder 11, wobei das zweite Kühlfluid in thermischem Kontakt mit der Wärmeaufnahmeseite (202) steht, insbesondere den Hohlraum (224) des zweiten Wärmeaustauschbereichs (220) durchströmt.

16. Reinigungsgerät (110) nach Anspruch 14, wobei der Hohlraum (224) des zweiten Wärmeaustauschbereichs (220) ganz oder teilweise von der feuchten Luft durchströmt wird.

17. Reinigungsgerät (110) nach einem der vorhergehenden Ansprüche, wobei die Wärmerückgewinnungseinrichtung (152) weiterhin mindestens einen Temperatursensor (200) zum Erfassen einer Temperatur der feuchten Luft und/oder mindestens einen Feuchtigkeitssensor zum Erfassen einer Feuchtigkeit der feuchten Luft umfasst.

18. Reinigungsgerät (110) nach einem der vorhergehenden Ansprüche, wobei das Reinigungsgerät (110) mindestens eine Durchlaufgeschirrspülmaschine (112) mit mindestens einer Reinigungszone (128, 132, 136, 138) umfasst, wobei die Durchlaufgeschirrspülmaschine (112) derart eingerichtet ist, dass das Reinigungsgut (114) die Reinigungszone (128, 132, 136, 138) in einer Durchlaufrichtung (116) durchläuft, wobei die mindestens eine Reinigungszone (128, 132, 136, 138) mindestens eine Klarspülzone (136, 138) mit mindestens einem Klarspültank umfasst, wobei das erste Kühlfluid nach Durchströmen der Fluidheizvorrichtung (206) in den Klarspültank geleitet wird.

19. Verfahren zur Wärmerückgewinnung in einem Reinigungsgerät (110), insbesondere in einem Reinigungsgerät (110) nach einem der vorhergehenden Ansprüche, wobei das Reinigungsgerät (110) eingerichtet ist, um das Reinigungsgut (114) mit mindestens einem Reinigungsfluid zu beaufschlagen, wobei das Reinigungsgerät (110) mindestens eine Wärmerückgewinnungseinrichtung (152) aufweist, wobei die Wärmerückgewinnungseinrichtung (152) eingerichtet ist, um feuchter Luft aus dem Reinigungsgerät (110) Wärme zu entziehen, **dadurch gekennzeichnet, dass** die Wärmerückgewinnungseinrichtung (152) mindestens ein Peltierelement (194) aufweist, wobei das Peltierelement (194) eine Wärmeaufnahmeseite (202) und eine Abwärmeseite (204) aufweist, wobei das Verfahren derart durchgeführt wird, dass der feuchten Luft mittels der Wärmeaufnahmeseite (202) Wärme entzogen wird, wobei die Abwärmeseite (204) des Peltierelements (194) mittels mindestens eines ersten Kühlfluids gekühlt wird, wobei das erste Kühlfluid anschließend einem in dem Reinigungsgerät (110) ablaufenden Reinigungsprozess zugeführt wird, um die an der Abwärmeseite (204) des Peltierelements (194) aufgenommene Wärme zumindest teilweise dem Reinigungsgerät (110) wieder zuzuführen, und die Wärmerückgewinnungseinrichtung (152) mindestens einen ersten Fluidwärmetauscher (176) aufweist, wobei der erste Fluidwärmetauscher (176) eingerichtet ist, um der feuchten Luft eine erste Wärmemenge zu entziehen, wobei die Wärmeaufnahmeseite (202) des Peltierelements (194) eingerichtet ist um der feuchten Luft eine zweite Wärmemenge zu entziehen, wobei das erste Kühlfluid zunächst den ersten Fluidwärmetauscher (176) durchströmt, wobei das erste Kühlfluid anschließend die Abwärmeseite(204) des Peltierlements (94) kühlt.

20. Verfahren nach dem vorhergehenden Anspruch, wobei die Wärmerückgewinnungseinrichtung (152) mindestens einen ersten Fluidwärmetauscher (176) aufweist, wobei der erste Fluidwärmetauscher (176) eingerichtet ist, um der feuchten Luft eine erste Wärmemenge zu entziehen, wobei die Wärmeaufnahmeseite (202) des Peltierelements (194) eingerichtet ist, um der feuchten Luft eine zweite Wärmemenge zu entziehen, wobei das erste Kühlfluid zunächst den ersten Fluidwärmetauscher (176) durchströmt, wobei das erste Kühlfluid anschließend die Abwärmeseite (204) des Peltierelements (194) kühlt.

21. Verfahren nach einem der beiden vorhergehenden Ansprüche, wobei eine Temperatur und/oder eine Feuchtigkeit der feuchten Luft nach Durchströmen der Wärmerückgewinnungseinrichtung (152) gesteuert und/oder geregelt wird, indem mindestens eine Kühlleistung des Peltierelements (194) gesteuert und/oder geregelt wird.

22. Verfahren nach einem der vorhergehenden Verfahrensansprüche, wobei eine Temperatur an der Wärmeaufnahmeseite (202) und/oder eine Temperatur an der Abwärmeseite (204) gesteuert und/oder geregelt wird.

## Claims

1. Cleaning appliance (110) for the cleaning of cleaning stock (114), the cleaning appliance (110) being set up in order to act with at least one cleaning fluid upon the cleaning stock (114) in at least one cleaning chamber (118), the cleaning appliance (110) having at least one fluid tank (207) for storing the cleaning fluid, the cleaning appliance (110) having a suction-extraction device (154) for the section-extraction of moist air from the cleaning chamber (118), the cleaning appliance (110) having at least one heat recovery device (152), the heat recovery device (152) being set up in order to extract heat from the moist air, **characterized in that** the heat recovery device (152) has at least one Peltier element (194), the Peltier element (194) having a heat-absorption side (202) and a waste-heat side (204), the waste-heat side (204) being in thermal contact with a fluid heating device (206), the fluid heating device (206) being in contact with a first cooling fluid and being set up in order to heat the latter, and the cleaning appliance (110) being set up, further, in order to use the first cooling fluid for a cleaning process, the heat recovery device (152) having, furthermore, at least one second fluid heat exchanger (186), a second cooling fluid flowing through the second fluid heat exchanger (186) and the second cooling fluid being in thermal contact in at least one fluid cooling device (208) with the heat-absorption side (202) of the Peltier element (194).

2. Cleaning appliance (110) according to the preceding claim, the heat recovery device (152) having at least one first fluid heat exchanger (176), the first fluid heat exchanger (176) being set up in order to extract a first heat quantity from the moist air, the heat-absorption side (202) of the Peltier element (194) being set up in order to extract a second heat quantity from the moist air.

3. Cleaning appliance (110) according to the preceding claim, the first cooling fluid flowing through the first fluid heat exchanger (176), the first cooling fluid, after flowing through the first fluid heat exchanger (176), flowing through the fluid heating device (206).

4. Cleaning appliance (110) according to one of the two preceding claims, the first fluid heat exchanger (176) comprising at least one open cooling-fluid line (180) through which the first cooling fluid flows, an outflow end (184) of the cooling-fluid line (180) being connected to the fluid heating device (206).

5. cleaning appliance (110) according to the preceding claim, an inflow end (182) of the cooling-fluid line (180) being connected to a cold-water connection.

6. Cleaning appliance (110) according to one of the preceding claims, the heat recovery device (152) having at least one heat pump (226), the heat pump (226) being set up in order to extract a third heat quantity from the moist air (162).

7. Cleaning appliance (110) according to one of the preceding claims, the heat recovery device (152) comprising at least one first fluid heat exchanger (175), at least one heat pump (226), in particular a compressor heat pump, and the at least one Peltier element (194).

8. Cleaning appliance (110) according to the preceding claim, the heat recovery device being constructed in a cascaded manner and comprising in succession, in a direction of flow of the moist air (162), the at least one first fluid heat exchanger (170), the at least one heat pump (226) and the at least one Peltier element (194).

9. Cleaning appliance (110) according to the preceding claim, the first cooling fluid flowing through the first fluid heat exchanger (176), the first cooling fluid, after flowing through the first fluid heat exchanger (176), flowing through the heat pump (226), and the first cooling fluid, after flowing through the heat pump (226), flowing through the fluid heating device (206).

10. Cleaning appliance (110) according to one of the preceding claims, the heat recovery device (152) comprising, furthermore, at least one mixing device (232), the mixing device (232) being set up in order to admix an ambient air (240) to the moist air (162) before the discharge of the latter into the surroundings (236).

11. Cleaning appliance (110) according to the preceding claim, the second fluid heat exchanger (186) having a heat exchanger circuit (190) through which the second cooling fluid flows, the heat exchanger circuit comprising at least one heat exchanger region (188), which is in contact with the moist air, and the fluid cooling device (208).

12. Cleaning appliance (110) according to one of the preceding claims, a plurality of Peltier elements (194) being arranged, stacked in a cascade-like manner in Peltier stacks (210), each with a heat-absorption side (202) and each with a waste-heat side (209).

13. Cleaning appliance (110) according to the preceding claim, a plurality of Peltier stacks (210) being arranged alternately with respect to their heat-absorption sides (202) and to their waste-heat sides (204) and being combined into a Peltier module (212), in each case heat exchange regions being arranged between the Peltier stacks (210), in each case at least one first heat exchange region (218) being in thermal contact with at least two waste-heat sides (204) of the Peltier stacks (210), and in each case at least one second heat exchanger region (220) being in thermal contact with at least two heat-absorption sides (202) of the Peltier stacks (210).

14. Cleaning appliance (110) according to the preceding claim, the first heat exchanger region (218) and/or the second heat exchange region (220) comprising at least one cavity (222, 224), the first fluid flowing through the cavity (222) of the first heat exchange region (218).

15. Cleaning appliance (110) according to one of Claims 12 to 14 and according to either one of Claims 1 and 11, the second cooling fluid being in thermal contact with the heat-absorption side (202), in particular flowing through the cavity (224) of the second heat exchange region (220).

16. Cleaning appliance (110) according to Claim 14, the moist air flowing completely or partially through the cavity (224) of the second heat exchange region (220) .

17. Cleaning appliance (110) according to one of the preceding claims, the heat recovery device (152) comprising, furthermore, at least one temperature sensor (200) for detecting a temperature of the moist air and/or at least one moisture sensor for detecting a moisture of the moist air.

18. Cleaning appliance (110) according to one of the preceding claims, the cleaning appliance (110) comprising at least one flow-type dishwasher (112) having at least one cleaning zone (128, 132, 136, 138), the flow-type dishwasher (112) being set up in such a way that the cleaning stock (114) runs through the cleaning zone (128, 132, 136, 138) in a flow direction (11.6), the at least one cleaning zone (128, 132, 136, 138) comprising at least one rinsing zone (136, 138) with at least one rinsing tank, the first cooling fluid, after flowing through the fluid heating device (206), being conducted into the rinsing tank.

19. Method for heat recovery in a cleaning appliance (110), in particular in a cleaning appliance (110) according to one of the preceding claims, the cleaning appliance (110) being set up in order to act with at least one cleaning fluid upon the cleaning stock (114), the cleaning appliance (110) having at least one heat recovery device (152), the heat recovery device (152) being set up in order to extract heat from moist air out of the cleaning appliance (110), **characterized in that** the heat recovery device (152) has at least one Peltier element (194), the Peltier element (194) having a heat-absorption side (202) and a waste-heat side (204), the method being carried out in such a way that heat is extracted from the moist air by means of the heat-absorption side (202), the waste-heat side (204) of the Peltier element (194) being cooled by means of at least one first cooling fluid, the first cooling fluid subsequently being supplied to a cleaning process proceeding in the cleaning appliance (110), in order to supply the heat absorbed on the waste-heat side (204) of the Peltier element (194) to the cleaning appliance (110) at least partially again, and the heat recovery device (152) having at least one first fluid heat exchanger (176), the first fluid heat exchanger (176) being set up in order to extract a first heat quantity from the moist air, the heat-absorption side (202) of the Peltier element (194) being set up in order to extract a second heat quantity from the moist air, the first cooling fluid first flowing through the first fluid heat exchanger (176), the first cooling fluid subsequently cooling the waste-heat side (204) of the Peltier element (194).

20. Method according to the preceding claim, the heat recovery device (152) having at least one first fluid heat exchanger (176), the first fluid, heat exchanger (176) being set up in order to extract a first heat quantity from the moist air, the heat-absorption side (202) of the Peltier element (194) being set up in order to extract a second heat quantity from the moist air, the first cooling fluid first flowing through the first fluid heat exchanger (176), the first cooling fluid subsequently cooling the waste-heat side (204) of the Peltier element (194).

21. Method according to one of the two preceding claims, a temperature and/or a moisture of the moist air, after flowing through the heat recovery device (152), being controlled and/or regulated in that at least one cooling capacity of the Peltier element (194) is controlled and/or regulated.

22. Method according to one of the preceding method claims, a temperature on the heat-absorption side (202) and/or a temperature on the waste-heat side (204) being controlled and/or regulated.

## Revendications

1. Appareil de nettoyage (110) pour le nettoyage d'un produit à nettoyer (114), l'appareil de nettoyage (110) étant conçu pour amener au produit à nettoyer (114) placé dans au moins une chambre de nettoyage (118) au moins un liquide de nettoyage, l'appareil de nettoyage, (110) comportant au moins un réservoir de liquide (207) pour stocker le liquide de nettoyage, l'appareil de nettoyage (110) comportant un dispositif d'aspiration (154) pour aspirer l'air humide hors de la chambre de nettoyage (118), l'appareil de nettoyage (110) comportant au moins un dispositif de récupération de chaleur (152), le dispositif de récupération de chaleur (152) étant conçu pour extraire la chaleur de l'air humide, **caractérisé en ce que** le dispositif de récupération de chaleur (152) comporte au moins un élément de Peltier (194), l'élément de Peltier (194) comportant un côté d'accumulation de chaleur (202) et in côté d'évacuation de chaleur (204), le côté d'évacuation de chaleur (204) étant en contact thermique avec un dispositif de chauffage de liquide (206), le dispositif de chauffage de liquide (206) étant en contact avec un premier liquide de refroidissement et étant conçu pour le réchauffer et l'appareil de nettoyage (110) étant en outre conçu pour utiliser le premier liquide de refroidissement pour un traitement de nettoyage, le dispositif de récupération de chaleur (152) comportant en outre au moins un deuxième échangeur thermique par liquide (186), le deuxième échangeur thermique par liquide (186) étant traversé par un deuxième liquide de refroidissement et le deuxième liquide de refroidissement étant en contact thermique avec le côté d'accumulation de chaleur (202) de l'élément de Peltier (194) dans au moins un dispositif de refroidissement de liquide (208).

2. Appareil de nettoyage (110) selon la revendication précédente, le dispositif de récupération de chaleur (152) comportant au moins un premier échangeur thermique par liquide (176), le premier échangeur thermique par liquide (176) étant conçu pour extraire de l'air humide une première quantité de chaleur, le côté d'accumulation de chaleur (202) de l'élément de Peltier (194) étant conçu pour extraire de l'air humide une deuxième quantité de chaleur.

3. Appareil de nettoyage (110) selon la revendication précédente, le premier échangeur thermique par liquide (176) étant traversé par le premier liquide de refroidissement, le premier liquide de refroidissement traversant le dispositif de chauffage de liquide (206) après traversée du premier échangeur thermique par liquide (176).

4. Appareil de nettoyage (110) selon l'une quelconque des deux revendications précédentes, le premier échangeur thermique par liquide (176) comprenant au moins une conduite de liquide de refroidissement (180) ouverte traversée par le premier liquide de refroidissement, une extrémité d'évacuation (184) de la conduite de liquide de refroidissement (180) étant reliée au dispositif de chauffage de liquide (206).

5. Appareil de nettoyage (110) selon la revendication précédente, une extrémité d'alimentation (182) de la conduite de liquide de refroidissement (180) étant reliée à un raccordement d'eau froide.

6. Appareil de nettoyage (110) selon l'une quelconque des revendications précédentes, le dispositif de récupération de chaleur (152) comportant au moins une pompe à chaleur (226), la pompe à chaleur (226) étant conçue pour extraire de l'air humide (162) une troisième quantité de chaleur.

7. Appareil de nettoyage (110) selon l'une quelconque des revendications précédentes, le dispositif de récupération de chaleur (152) comprenant au moins un premier échangeur thermique par liquide (176), au moins une pompe à chaleur (226), notamment une pompe à chaleur de compresseur, et l'au moins un élément de Peltier (194).

8. Appareil de nettoyage (110) selon la revendication précédente, le dispositif de récupération de chaleur étant construit en cascade et comprenant successivement, dans une direction de circulation de l'air humide (162), l'au moins un premier échangeur thermique par liquide (176), l'au moins une pompe à chaleur (226) et l'au moins un élément de Peltier (194).

9. Appareil de nettoyage (110) selon la revendication précédente, le premier échangeur thermique par liquide (176) étant traversé par le premier liquide de refroidissement, le premier liquide de refroidissement traversant, après traversée du premier échangeur thermique par liquide (176), la pompe à chaleur (226) et le premier liquide de refroidissement traversant, après traversée de la pompe à chaleur (226), le dispositif de chauffage de liquide (206).

10. Appareil de nettoyage (110) selon l'une quelconque des revendications précédentes, le dispositif de récupération de chaleur (152) comprenant en outre au moins un dispositif de mélange (232), le dispositif de mélange (232) étant conçu pour mélanger un air ambiant (240) à l'air humide (162) avant de l'envoyer dans l'environnement (236).

11. Appareil de nettoyage (110) selon la revendication précédente, le deuxième échangeur thermique par liquide (186) comportant un circuit d'échangeur thermique (190) traversé par le deuxième liquide de refroidissement, le circuit d'échangeur thermique comprenant au moins une zone d'échangeur thermique (188) en contact avec l'air humide et comprenant le dispositif de refroidissement de liquide (208).

12. Appareil de nettoyage (110) selon l'une quelconque des revendications précédentes, plusieurs éléments de Peltier (194) de type en cascade étant disposés de façon empilée dans des empilements de Peltier (210) avec respectivement un côté d'accumulation de chaleur (202) et respectivement un côté d'évacuation de chaleur (204).

13. Appareil de nettoyage (110) selon la revendication précédente, plusieurs empilements de Peltier (210) étant disposés de façon alternée par rapport à leurs côtés d'accumulation de chaleur (202) et leurs côtés d'évacuation de chaleur (204) et étant regroupés en un module de Peltier (212), des zones d'échange thermique étant respectivement disposées entre les empilements de Peltier (210), respectivement au moins une première zone d'échange thermique (218) étant en contact avec au moins deux côtés d'évacuation de chaleur (204) des empilements de Peltier (210) et respectivement au moins une deuxième zone d'échange thermique (220) étant en contact avec au moins deux côtés d'accumulation de chaleur (202) des empilements de Peltier (210).

14. Appareil de nettoyage (110) selon la revendication précédente, la première zone d'échange thermique (218) et/ou la deuxième zone d'échange thermique (220) comprenant au moins une chambre creuse (222, 224), la chambre creuse (222) de la première zone d'échange thermique (218) étant traversée par le premier liquide de refroidissement.

15. Appareil de nettoyage (110) selon l'une quelconque des revendications 12 à 14 et selon l'une quelconque des revendications 1 ou 11, le deuxième liquide de refroidissement étant en contact thermique avec le côté d'accumulation de chaleur (202), traversant notamment la chambre creuse (224) de la deuxième zone d'échange thermique (220).

16. Appareil de nettoyage (110) selon la revendication 14, la chambre creuse (224) de la deuxième zone d'échange thermique (220) étant traversée en partie ou entièrement par l'air humide.

17. Appareil de nettoyage (110) selon l'une quelconque des revendications précédentes, le dispositif de récupération de chaleur (152) comprenant en outre au moins un capteur de temperature (200) pour détecter une température de l'air humide et/ou au moins un capteur d'humidité pour détecter une humidité de l'air humide.

18. Appareil de nettoyage (110) selon l'une quelconque des revendications précédentes, l'appareil de nettoyage (110) comprenant an moins un lave-vaisselle en continu (112) avec au moins une zone de nettoyage (128, 132, 136, 138), le lave-vaisselle en continu (112) étant conçu de telle sorte que le produit à nettoyer (114) traverse la zone de nettoyage (128, 132, 136, 138) dans une direction de traversée (116), l'au moins une zone de nettoyage (128, 132, 136, 138) comprenant au moins une zone de rinçage à l'eau claire (136, 138) équipée d'au moins un réservoir de rinçage à l'eau claire, le premier liquide de refroidissement étant amené dans le réservoir de rinçage à l'eau claire après traversée du dispositif de chauffage de liquide (206).

19. Procédé de récupération de chaleur dans un appareil de nettoyage (110), notamment dans un appareil de nettoyage (110) selon l'une quelconque des revendications précédentes, l'appareil de nettoyage (110) étant conçu pour amener au produit à nettoyer (114) au moins un liquide de nettoyage, l'appareil de nettoyage (110) comportant au moins un dispositif de récupération de chaleur (152), le dispositif de récupération de chaleur (152) étant conçu pour extraire la chaleur de l'air humide hors de l'appareil de nettoyage (110), **caractérisé en ce que** le dispositif de récupération de chaleur (152) comporte au moins un élément de Peltier (194), l'élément de Peltier (194) comportant un côté d'accumulation de chaleur (202) et un côté d'évacuation de chaleur (204), le procédé étant exécuté de telle sorte que la chaleur est extraite de l'air humide à l'aide du côté d'accumulation de chaleur (202), le côté d'évacuation de chaleur (204) de l'élément de Peltier (194) étant refroidi à l'aide d'au moins un premier liquide de refroidissement, le premier liquide de refroidissement étant ensuite amené à un traitement de nettoyage se produisant dans l'appareil de nettoyage (110), pour ramener au moins en partie la chaleur absorbée au niveau du côté d'évacuation de chaleur (204) de l'élément de Peltier (194) à l'appareil de nettoyage (110) et le dispositif de récupération de chaleur (152) comportant au moins un premier échangeur thermique par liquide (176), le premier échangeur thermique par liquide (176) étant conçu pour extraire de l'air humide une première quantité de chaleur, le côté d'accumulation de chaleur (202) de l'élément de Peltier (194) étant conçu pour extraire de l'air humide une deuxième quantité de chaleur, le premier liquide de refroidissement traversant d'abord le premier échangeur thermique par liquide (176), le premier liquide de refroidissement refroidissant ensuite le côté d'évacuation de chaleur (204) de l'élément de Peltier (94).

20. Procédé selon la revendication précédente, le dispositif de récupération de chaleur (152) comportant au moins un premier échangeur thermique par liquide (176), le premier échangeur thermique par liquide (176) étant conçu pour extraire de l'air humide une première quantité de chaleur, le côté d'accumulation de chaleur (202) de l'élément de Peltier (194) étant conçu pour extraire de l'air humide une deuxième quantité de chaleur, le premier liquide de refroidissement traversant d'abord le premier échangeur thermique par liquide (176), le premier liquide de refroidissement refroidissant ensuite le côté d'évacuation de chaleur (204) de l'élément de Peltier (194).

21. Procédé selon l'une quelconque des deux revendications précédentes, une température et/ou une humidité de l'air humide étant commandées et/ou réglées après traversée du dispositif de récupération de chaleur (152), par commande et/ou réglage d'au moins une puissance de refroidissement de l'élément de Peltier (194).

22. Procédé selon l'une quelconque des revendications précédentes, une temperature étant commandée et/ou réglée au niveau du côté d'accumulation de chaleur (202) et/ou une température étant commandée et/ou réglée au niveau du côté d'évacuation de chaleur (204).
